(19) Europäisches Patentamt / European Patent Office / Office européen des brevets

(11) **EP 4 108 082 A1**

(12) **EUROPEAN PATENT APPLICATION**

(43) Date of publication:
**28.12.2022 Bulletin 2022/52**

(21) Application number: **21180587.4**

(22) Date of filing: **21.06.2021**

(51) International Patent Classification (IPC):
**A01M 1/02** (2006.01)

(52) Cooperative Patent Classification (CPC):
**A01M 1/026**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FaunaPhotonics Agriculture & Enviromental A/S**
**2450 Copenhagen SV (DK)**

(72) Inventors:
- **LEMMICH, Jesper**
  **2450 Copenhagen SV (DK)**

- **STILL, Laurence**
  **2450 Copenhagen SV (DK)**
- **PEDERSEN, Michael Stanley**
  **2450 Copenhagen SV (DK)**
- **MALMROS, Ludvig**
  **2450 Copenhagen SV (DK)**
- **NIELSEN, Josefine Holm**
  **2450 Copenhagen SV (DK)**
- **POULSEN, Knud**
  **2450 Copenhagen SV (DK)**

(74) Representative: **Guardian**
**IP Consulting I/S**
**Diplomvej, Building 381**
**2800 Kgs. Lyngby (DK)**

(54) **APPARATUS AND METHOD FOR MEASURING INSECT ACTIVITY**

(57) A method for measuring insect activity in a geographic area, the method comprising: traversing at least a portion of target area by a movable insect sensor, the insect sensor configured to generate sensor data indicative of one or more insect detection events, each insect detection event being indicative of one or more detected insects in a detection volume of the movable insect sensor; creating, by a data processing system based on the generated sensor data, an insect distribution map of the target area, the insect distribution map representing a plurality of respective subareas of the target area, each subarea having associated with it a respective amount of local insect activity in said subarea.

FIG. 1

**EP 4 108 082 A1**

## Description

Technical field

The present disclosure relates to an apparatus and method for measuring insect activity.

Background

It is generally desirable accurately to determine insect activity within a geographic area, such as an agricultural area, a forestry area or another geographic area of interest.

For example, knowledge about insect activity in a geographic area may serve as valuable input for supporting various decisions, e.g. decisions about which types of crops or plants to plant in order to support biodiversity, and for optimizing the use of insecticides, etc.

When distributing insecticides across a field of crops or other area on which insects are to be controlled, it is generally desirable to apply the right types of insecticides in the right amounts to obtain an efficient insect control while not applying unnecessary, useless or even environmentally harmful amounts of insecticides. Therefore, an accurate measurement of local insect activity is desirable.

The number of insects in a geographic area may vary over time but also across a given area, e.g. across a field on which crops are grown. These temporal and spatial variations make accurate determination of reliable and consistent measures of insect activity challenging. In particular, insects are often non-uniformly distributed across an area and hot spots of locally high insect concentrations may occur. Moreover, the location of such hot spots may change over time.

The article "Assessment of crop insect damage using unmanned aerial systems: A machine learning approach" by Puig Garcia, Eduard, Gonzalez, Felipe, Hamilton, Grant, & Grundy, Pau; in Weber, T, McPhee, M J, & Anderssen, R S (Eds.) Proceedings of MODSIM2015, 21st International Congress on Modelling and Simulation; Modelling and Simulation Society of Australia and New Zealand Inc. (MSSANZ), Australia, pp. 1420-1426, describes a method for assessment of crop insect damage based on images captured from an unmanned aerial vehicle.

However, this method only allows an assessment of insect activity after the insects already have caused damage to the crop.

It is thus generally desirable to provide a reliable measurement of insect activity that does not rely on recording crop damage caused by the insects.

Summary

According to one aspect, disclosed herein are embodiments of a method for measuring insect activity in a geographic area, the method comprising:

- traversing at least a portion of a target area by a movable insect sensor, the insect sensor configured to acquire sensor data indicative of one or more insect detection events, each insect detection event being indicative of one or more detected insects in a detection volume of the movable insect sensor;
- creating, by a data processing system based on the acquired sensor data, an insect distribution map of the target area, the insect distribution map representing a plurality of respective subareas of the target area, each subarea having associated with it a respective amount of local insect activity in said subarea.

Generally, the process computes an insect distribution map indicative of spatially resolved insect activity across the target area. The computation of the insect distribution map is based directly on locally detected insects that are detected by a movable insect sensor while traversing the target area. Accordingly, the process does not have to rely on detecting how the insects affect the vegetation but it directly detects the actual insect activity, thus allowing a more accurate mapping of the current insect activity even before the insect activity affects the vegetation. Moreover, as the process acquires sensor data by traversing the area by an insect sensor, a high resolution of detection may be achieved.

In some embodiments the process, the process is capable of detecting individual insects and/or distinguish different types, e.g. different species, of insects. Accordingly, the local insect activity may be a total insect activity indicative of the amount of all types of detectable insects. Alternatively, the local insect activity may be a specific insect activity indicative of the amount of insects of one or more specific types, e.g. one or more specific species, life stages, and/or the like. Yet alternatively, the local insect activity may be indicative of a local biodiversity index. Generally, the created insect distribution map is indicative of the spatial distribution of the current insect activity in a target area, where the current insect activity may reflect the total activity, the specific activity of one or more specific types of insects, a measure of biodiversity, and/or a different measure of insect activity.

Generally, the term biodiversity index refers to a numerical measure of insect biodiversity, in particular airborne insects such as flying or jumping insects. The biodiversity index may be represented as a number, e.g. a number between 0 and 1, or in another suitable way, e.g. as a categorization into biodiversity classes, e.g. "low', "medium", "high", etc. In some embodiments, the computation of the biodiversity may comprise correlating optically detected attributes associated with a set of detected insect detection events to a known biodiversity metrics such as, but not limited to, the Simpsons or the Shannon biodiversity index, e.g. as described in co-pending international patent application no. PCT/EP2021/054181.

The local insect activity in a subarea may e.g.

be expressed as a number of detected insects in said subarea, optionally normalised by the size of the subarea and/or by the local observation time in said subarea. The local observation time in a subarea may be determined as the amount of time during which the insect sensor has acquired sensor data in said subarea while traversing the target area, in particular sensor data suitable for detecting insect detection events from the acquired sensor data. The suitability of the sensor data for detecting insect detection events, may be determined based on one or more criteria, such as a minimum signal-to-noise ratio or another parameter indicative of the quality of the acquired sensor data.

Embodiments of the method described herein provide an insect distribution map, which represents the variation of insects and, in particular of airborne insects, over space. The measured spatial distribution of insect activity in a geographic area may have a number of uses. For example, accurate knowledge of the spatial variation of insect activity may help farmers with precision spraying, e.g. only spraying the areas with high activity, and also potentially help identify problem areas, or areas which consistently show early signs of infestation before others, or areas which are relatively more frequented by beneficial insects.

Embodiments of the method described herein do not rely on a large number of stationary sensors or traps placed in a grid or other formation over the target area of interest, thus reducing the costs of the measurements and allowing the acquisition of relevant data without time-consuming collection of data from many sensors or traps. Embodiments of the method described herein thus facilitate an efficient measurement of the spatially resolved insect activity, which is relatively inexpensive, uses only limited hardware and power, involves only limited disruption to the target area and allows integration of the measurements with other activities already requiring a vehicle to move over the field. Additionally, using a moving insect sensor allows larger areas to be mapped than would be feasible or reasonable with a larger number of stationary sensors.

The insect sensor may move at different speeds, may repeatedly re-visit some portions of the target areas or otherwise traverse the target area in a non-uniform manner. Therefore the number of insect events detected by the moving insect sensor in different parts of the target area may not be equally representative for the actual insect distribution. Accordingly, in some embodiments, creating the insect distribution map comprises selecting a size of at least a first subarea of the plurality of subareas based on a first amount of time during which the insect sensor has acquired sensor data in said first subarea while traversing at least a portion of the target area. By selecting the size of one or more subareas of the insect distribution map based on the time spent by the insect sensor acquiring sensor data in the respective subareas, the resulting insect distribution map provides a more reliable measure of the insect distribution in the field, independently of the movement pattern of the insect sensor. It will be appreciated that the process may select the size of one subarea of the plurality of subareas, of a subset of the plurality of subareas or, in some embodiments, of all subareas of the plurality of subareas. As will be described in more detail below, the process may select a uniform size for all subareas or different sizes for respective subareas. Generally, the subareas may be areas of uniform shape and/or size or they may differ in shape and/or size.

In some embodiments, the method receives position information indicative of respective sensor positions of the insect sensor within the target area having been traversed by the insect sensor. Based on the received position information, the process may determine respective local observation times for one or more of the plurality of subareas. In some embodiments, the position information may be received from the movable insect sensor or from a vehicle on which the movable insect sensor is mounted. Examples of suitable position sensors include a GPS sensor or another suitable sensor employing a suitable satellite-based positioning system. Alternatively, the positions of the insect sensor may be detected in another manner, e.g. by monitoring the movement of the movable insect sensor by a stationary sensor, from an unmanned aerial vehicle and/or the like. The position information may be time-resolved position information indicative of the sensor positions of the insect sensor at respective times. In some embodiments, the process only records sensor position information of the insect sensor when the insect sensor is active, i.e. when the insect sensor is acquiring sensor data, but regardless as to whether the acquired sensor data actually represents any detected insects, as long as the acquired sensor data is of sufficiently high quality to allow detection of insect detection events if they occur. In some embodiments, the method only records position information and/or only uses sensor data when the acquired sensor data is suitable for identifying insect sensor. To this end, some embodiments of the insect sensor may determine one or more quality indicators indicative of the suitability of the acquired sensor data for identifying insect detection events. Examples of such sensor data quality indicators may include a signal-to-noise ratio, etc. Some embodiments of the insect sensor may only transmit position data responsive to the sensor data quality indicators fulfilling one or more minimum quality criteria, e.g. the signal-to-noise ratio being above a minimum threshold, etc. Alternatively or additionally, some embodiments of the insect sensor may transmit the one or more sensor data quality indicators to the data processing system and the data processing system records or disregards position information and/or the acquired sensor data in dependence of the sensor data quality indicators fulfilling one or more minimum quality criteria. Yet additionally or alternatively, the data processing system may receive the sensor data, compute one or more sensor data quality indicators and make a determination as to the suitability of the received sensor data for identifying insect detection events based on the thus computed one or more sensor data quality indicators.

In some embodiments, the process initially determines a set of base subareas, in particular a set of non-overlapping base subareas. All base subareas may have a uniform shape and/or size. In particular, the set of base subareas may form a regular grid of non-overlapping base subareas. The base subareas may be squares, hexagons, rectangles or another type of base geometric shape.

Similarly, the subareas of the created insect distribution map may themselves all have a uniform shape and/or size. In particular, the subareas of the created insect distribution map may form a regular grid of non-overlapping subareas. The subareas of the created insect distribution map may be squares, hexagons, rectangles or another type of base geometric shape, in particular a base geometric shapes forming a unit cell of a regular grid.

In particular, in some embodiments, the subareas of the created insect distribution map may then be determined as a subset or as all of the base subareas or they may be created by modifying, in particular by resizing, the grid of base subareas.

Alternatively or additionally, one, some or all of the subareas of the created insect distribution map may be created as unions of one or more respective base subareas of the initially created set of base subareas, preferably such that each subarea of the created insect distribution is a connected area, e.g. formed as unions of neighboring base subareas. In particular, each subarea of the created distribution map may be formed as a union of one or more non-overlapping base subareas where all base subareas have a uniform shape and/or size, preferably as unions of unit cells of a regular grid, such as a square grid, rectangular grid, hexagonal grid or the like.

In some embodiments, the process initially selects a subset of the base subareas of the set of base subareas as an initial set of subareas, and creates the subareas of the created insect distribution map only from the selected subset of initial subareas. The selection of the initial subareas from the set of base subareas may be based on the sensor position data indicative of the positions of the sensor data. In particular, the initial subareas may be selected as those base subareas where the insect sensor has actually acquired sensor data, in particular suitable sensor data, or acquired sensor data, in particular suitable sensor data for at least an observation time threshold. Accordingly, portions of the target area from which no sufficient sensor data is available may be disregarded up front from the creation of the insect distribution map.

In particular, in some embodiments, creating the distribution map comprises:

- determining a set of base subareas, in particular a grid of subareas, wherein the base subareas of the set together cover the entire target area,
- receiving sensor position data indicative of local observation times associated with the respective base subareas, the local observation times being indicative of respective amounts of time during which the insect sensor has acquired sensor data in the respective base subareas while traversing at least a portion of the target area, in particular sensor data suitable for detecting insect detection events,
- selecting, from the set of base subareas and based on the sensor position data, a set of initial subareas as a set of traversed base subareas from which the insect sensor has acquired sensor data for at least an observation time threshold, such as a predetermined observation time threshold. Accordingly, computing the distribution map may be restricted to those portions of the target area, which have actually been traversed, or successfully traversed, by the insect sensor, thus allowing an efficient computation and increasing the accuracy of the resulting distribution map. In this regard, the term successfully traversed subarea refers to a subarea that has been traversed by the insect sensor resulting in sufficiently useful and/or reliable sensor data.

To this end, the process may determine whether a subarea or base subarea has been successfully traversed based in one or more predetermined criteria associated with the data quality of the data obtained from the insect sensor associated with the traversed subarea. For example, the criteria associated with the data quality may comprise one or more of the following criteria:

- whether the sensor has spent a minimum amount of time in the subarea,
- whether a signal-to-noise ratio and/or other measure of sensor signal quality associated with the obtained sensor signal is higher than a threshold, and/or
- whether the insect sensor has detected one or more non-insect sensor events when traversing a subarea that may disturb detection of actual insect detection events.

These criteria may be used to compute the local observation time within a base subarea, e.g. as an effective local observation time during which suitable sensor data has been acquired in said base subarea. The observation time threshold required for a base subarea to be considered having been successfully traversed may be predetermined. Some embodiments of the process may simply require an observation time larger than zero, while other embodiments may require a local observation time larger than a positive observation time threshold, such as larger than 30 seconds, larger than 1 minute, larger than 5 minutes, or the like.

Creating the insect distribution map based on a set of base subareas, in particular on a grid of base subareas, provides a common reference set or grid relative to which different types of data related to the target area may be represented without need for computationally complex transformations. Examples of such different types of data that can be represented relative to a common set of base subareas may include crop data, data related to soil quality, measurements of other types of sensors, such as temperature, humidity, etc. The different types of data may e.g. be represented as respective data layers mapped on a common set of base subareas. Different insect distribution maps, e.g. specific to respective types of insects, may also be represented as different layers associated with a common grid of base subareas.

Accordingly, various decision-making processes, such as spraying decisions, decisions about the use of fertilizers, types of crops, irrigation and/or the like may be based on an optimized insect distribution map as described herein, optionally in combination with other information, such as environmental data, crop data, information about soil quality etc. When one or more specific insect distribution maps are created, specific to one or more particular insect types, e.g. insect species, life stages, etc., the decision making may further be based on knowledge about these specific insect types.

Preferably, the grid of base subareas is created such that one or more principle directions of the grid is aligned with corresponding principle directions of the target area, e.g. with one or more boundaries of the target area and/or aligned with a predominant direction of motion of the movable insect sensor.

Using a set of base subareas, or a subset of the set of base subareas, as initial subareas, i.e. as a starting point, for the creation of an insect distribution map is thus preferred. Nevertheless, it will be appreciated that other embodiments of the method may determine a set of initial subareas in a different manner, other than by selecting a subset of a set of base subareas.

Generally, in some embodiments, creating the distribution map comprises:

- determining a set of initial subareas of the target area;
- receiving sensor position data indicative of local observation times associated with the respective initial subareas, the local observation times being indicative of respective amounts of time during which the insect sensor has acquired sensor data in the respective initial subareas while traversing at least a portion of the target area, in particular sensor data suitable for detecting insect detection events,
- receiving sensor position data indicative of an amount of time spent by the insect sensor in respective ones of the set of initial subareas during the traversing of at least a portion of the target area by the insect sensor;
- resizing, based on the sensor position data, at least a first initial subarea of the set of initial subareas to obtain a first resized subarea in which the insect sensor has acquired sensor data for a first local observation time no less than a minimum local observation time.

The process may resize not only one but a plurality of the initial subareas or even all of them, such that the insect sensor has acquired sensor data in each of the resized subareas for respective local observation times no less than a minimum observation time. In some embodiments, the process starts with a set of initial subareas, e.g. with a predetermined regular grid of base subareas or of a selected subset of base subareas, as described above. The process may then determine the amount of time that the insect sensor has spent in one, some or each of the initial subareas and resize one, some or all of the initial subareas to obtain resized subareas, where each of the resized subareas has been traversed by the insect sensor and where the insect sensor has spent a certain minimum amount of time acquiring sensor data in some or each of the resized subareas. This process may be performed iteratively, e.g. by resizing, in each iteration, one or some initial subareas or one or some preliminarily resized subareas. A preliminarily resized subarea may be a subarea having been resized in a previous iteration but not yet such that the insect sensor has spent a certain minimum of time acquiring sensor data in said preliminarily resized subarea. Alternatively, multiple subareas, such as all subareas, may be resized in a single step. In any event determining the subarea sizes by resizing one or more initial subareas in one or multiple iterations provides a computationally efficient method of determining an accurate map of the insect distribution of a target area.

The minimum local observation time may be selected equal to the observation time threshold or different, in particular larger. The choice of minimum local observation time may depend on parameters such as the detection sensitivity or the detection volume of the insect sensor. The minimum local observation time may be selected based on prior knowledge of the expected insect activity in the target area and/or on known insect behavior. The prior knowledge about the insect behavior may include knowledge of the insect behavior in dependence of one or more environmental factors, such as the time of day, the time of year, wind speed, temperature, humidity or the like. Accordingly, in some embodiments, the process may receive information about one or more environmental factors, e.g. from one or more corresponding environmental sensors of the insect sensor and/or from one or more separate environmental sensors, e.g. a weather station. Accordingly, the minimum local observation time may be a predetermined, fixed value or it may be selected by the process dynamically and/or adaptively. The minimum local observation time may also be selected depending on the type of insect activity to be analyzed, e.g. whether the total insect activity is to be mapped or the insect activity of one or more selected types of insects, or whether a map of a biodiversity index is to be created. For example, a biodiversity map may require larger numbers of insects having been detected, which may require larger observation times.

The resizing of at least the first initial subarea may be performed in a number of ways. In some embodiments, the process initially selects a set of initial subareas and iteratively forms unions of multiple initial subareas and/or divides an initial subarea into multiple subareas, thus allowing the size and/or shape of the resulting resized subareas to vary across the map. Accordingly, an efficient mechanism is provided for mapping different parts of the target area with different resolution. For example, when the insect sensor is controlled to spend more time in a certain part of the target area, that part may automatically be represented by subareas of smaller size than parts of the subarea where less sensor data has been acquired, thus resulting in a higher resolution. Accordingly, in some embodiments, resizing comprises joining the first initial subarea with one or more neighboring initial subareas, adjacent to the first initial subarea. Alternatively, the resizing operation may be configured to otherwise allow the resulting map to include subareas of non-uniform size. It will be appreciated that the resizing by forming unions of initial subareas and/or by dividing initial subareas may further be controlled by one or more additional criteria, e.g. by limiting the size of the resized subareas to a certain maximum and/or minimum size, by imposing restrictions on the shape of the resized subareas, and/or the like.

In alternative embodiments, the process creates resized subareas of uniform size across the entire traversed subarea or at least across a portion of the traversed subarea. In particular, in some embodiments, the initial subareas of the set of initial subareas all have a uniform initial size and resizing comprises computing a set of resized subareas, wherein the resized subareas of the set of resized subareas all have a uniform resized size, different from the initial size.

When resizing multiple subareas, the resulting resized subareas may be determined such that the insect sensor has spent at least the minimum local observation time in each of the resized subareas. Alternatively, a less strict criterion for selecting the size of the resized subareas may be chosen. For example, the resulting resized subareas may be determined such that the insect sensor has spent at least the minimum local observation time in each of at least a predetermined fraction, e.g. at least 50% or at least 75% or at least 90%, of the resized subareas. Accordingly, the process may strike a balance between obtaining a map having a high resolution and a map where the insect density associated with each of the subareas of the resulting map accurately reflects the actual local insect activity in that subarea.

In some embodiments, the process may repeat the resizing to obtain a modified set of subareas wherein the insect sensor has spent respective amounts of time in each of the set of modified subareas, wherein some or each of the respective amounts of time are no smaller than the minimum local observation time.

In some embodiments, the method disclosed herein may be used to control the insect sensor or to provide instructions or guidance to an operator of a manually operated insect sensor. In particular some embodiments of the method disclosed herein may comprise controlling - or providing instructions or guidance to an operator for controlling - the movement of the insect sensor, e.g. for controlling which parts of the target area to traverse by the insect sensor. In particular, in some embodiments, the method comprises:

- creating an initial insect distribution map;
- identifying one or more of the subareas of the initial insect distribution map based on their respective local insect activity, e.g. by identifying subareas having a high insect activity, such as higher than a threshold activity, or by identifying subareas having a low insect activity, such as lower than a threshold activity;
- controlling, or providing instructions or guidance to an operator of the insect sensor for controlling the movable insect sensor to selectively traverse at least a portion of the identified one or more subareas to acquire supplemental sensor data;
- creating a refined insect distribution map having a higher spatial resolution in the identified one or more subareas than the initial insect distribution map. Accordingly, the process provides an efficient method of adaptively creating an insect distribution map, which provides a particularly high resolution in desired subareas, such as in areas of high insect activity.

In some embodiments, the detected insects are airborne insects moving above a ground surface. Examples of airborne insects include flying insects, jumping insects and insects that hover, glide or float in the air. Depending on the type of sensor and/or the type of insects to be detected, the ground surface may be the upper surface of the soil, an upper surface of a vegetation canopy or another reference surface. Embodiments of the process described herein are particularly well-suited for creating insect distribution maps of airborne insects, as the method utilizes a movable insect sensor traversing the target area. Airborne insects may otherwise be difficult to reliably detect other than by an insect sensor that detects insects within a relatively small range from the insect sensor, e.g. within 10 m or less from the insect sensor. Creating the insect density distribution map based on data from a movable insect sensor thus allows the insect distribution of airborne insects to be efficiently mapped across a large target area and with only few insect sensors, or even with only a single insect sensor.

In some embodiments, the insect sensor is an optical insect sensor configured to optically detect one or more attributes associated with insect detection events in a detection volume of the insect sensor, in particular in a detection volume outside and in a proximity of the insect sensors. In particular, some embodiments of the insect sensor comprise an illumination module configured to illuminate the detection volume and one or more detectors configured to detect light from the detection volume, in particular light emitted, in particular reflected or backscattered, by the insects responsive to being illuminated by the illumination module. The detector module may thus output a sensor signal indicative of the detected light, e.g. indicative of a detected light intensity as a function of time. An optical insect sensor has been found particularly useful for creating insect density distribution maps. In particular, the insect sensor is non-intrusive to the environment in the sense that it does not rely on and, consequently, is not biased by pheromones or other means of attracting, trapping or killing insects. In particular, insects may be detected in their natural environment regardless of their affinity to a certain lure or trap technology, thus reducing the sensitivity of the measurement results to different trapping techniques for different insect species. To this end, the detection volume is preferably an enclosure-free void/space allowing unrestricted movement of living airborne insects into and out of the void/space. Moreover, an optical insect sensor can be easily moved across a large target area and can perform measurements in relatively short measurement times.

The insect sensor may comprise one or more processing units configured to receive a sensor signal from the detector module and to process the received sensor signal so as to detect one or more insect detection events and to extract one or more optically detectable attributes associated with the detected insect detection events. In other embodiments, some or all of the processing steps are performed by a data processing system external to the insect sensor, or the processing steps may be distributed between a local processing unit of the insect sensor and a remote data processing system, separate from the insect sensor.

Here and in the following, the term processing unit is intended to comprise any circuit and/or device suitably adapted to perform the functions described herein. In particular, the term processing unit comprises a general- or special-purpose programmable microprocessor unit, such as a central processing unit (CPU) of a computer or of another data processing system, a digital signal processing unit (DSP), an application specific integrated circuits (ASIC), a programmable logic arrays (PLA), a field programmable gate array (FPGA), a special purpose electronic circuit, etc., or a combination thereof.

In some embodiments, the illumination module includes a light source configured to emit incoherent light, in particular one or more light emitting diodes and/or one or more halogen lamps, thus providing a cost efficient sensor that may illuminate a relatively large detection volume so as to allow the sensor to simultaneously monitor a relatively large detection volume. Accordingly, the illumination module may be configured to simultaneously illuminate the entire detection volume. Further, incoherent light sources are useful to provide a homogeneous, speckle free, illumination of the detection volume, in particular a simultaneous illumination of a large detection volume without the need for any scanning operation. This reduces the complexity of the optical system and allows reliable detection of attributes even of fast-moving insects, such as one or a combination of more than one attributes chosen from the following: wing beat frequencies, trajectories, body-wing ratio, relative or absolute total size, relative or absolute body size, relative or absolute wing size, glossiness, melanization, etc. Nevertheless, other light sources, including coherent light sources, such as lasers, may be used instead. In some embodiments, the light source is configured to output light continuously while, in other embodiments, the light is turned on and off intermittently, e.g. pulsed. In some embodiments, the illumination module is configured to emit light with varying intensity, in particular pulsed or otherwise modulated at one or more modulation frequencies.

In some embodiments, the method comprises identifying, from sensor signals from the one or more detectors, one or more types of insects, and/or determining respective amounts or numbers of the one or more types of insects detected in the detection volume. The identification of respective types of insects may be based on one or more indicators chosen from:

- an indicator feature extracted from the sensor signals by a trained machine-learning algorithm;
- a detected trajectory of movement of an insect inside the detection volume;
- a detected speed of movement of an insect inside the detection volume;
- one or more detected wing beat frequencies;
- a melanization ratio;
- an insect glossiness;
- a body-wing ratio;
- a relative or absolute total size;
- relative or absolute body size;
- a relative or absolute wing size.

Here, different types of insects may refer to different species or to other insect categories of a suitable taxonomy. Alternatively or additionally, different types of insects may refer to different life stages of insects and/or to other classifications. The identification of respective types of indicators based on one of the above and/or other indicators may be based on a look-up table, a decision tree, a neural network, a support vector machine, and/or the like. Alternatively or additionally, the identification may directly be based on the sensor signal or on an otherwise preprocessed sensor signal. Such identification may e.g. be performed by a machine-learning model, e.g. a model configured to receive a representation of the sensor signal and to classify the sensor signal into one of a known type of insects. Examples of suitable machine learning models include a convolutional neural network. For example, in some embodiments, the sensor signal or a preprocessed sensor signal may be fed into a neural network, such as a convolutional neural network, or another type of machine-learning model. The neural network may be a feed-forward neural network that includes an input layer receiving the sensor signal, e.g. a time series of detected light intensities at one or more wavelengths. The neural network may optionally receive additional inputs, e.g. otherwise calculated indicators. The neural network may include one or more hidden layers and an output layer. The neural network may be trained, based on a set of training examples, to classify the sensor signal into respective types, e.g. species, of insects. To this end, the training examples may include obtained signal sensors that have been obtained responsive to a known species of insects being present in the detection volume. The hidden layers of the trained neural network may represent automatically extracted features of the sensor signals that are fed into the neural network. The output layer may represent a classification received sensor signal based on feature values of the automatically extracted features as extracted by the one or more hidden layers.

The insect sensor may be configured to detect insect detection events in a predetermined detection volume relative to the insect sensor, e.g. a volume outside of a housing of the insect sensor, in particular in a predetermined proximity relative to the insect sensor. Accordingly, the detection volume may be a volume relative to the insect sensor wherein the detection volume traverses the target area with the insect sensor.

The insect sensor may comprise a housing. The insect sensor may comprise a propulsion mechanism, e.g. a motor and wheels, belts, a propeller, or other type propulsion system. The insect sensor may thus be self-propelled. Alternatively, the insect sensor may be mountable on a vehicle, such as a tractor, a spraying beam, or other agricultural vehicle, on an unmanned aerial vehicle, a self-driving robot, or the like. The insect sensor may be, or be mountable on, a ground vehicle or an aerial vehicle. The insect sensor may be, or be mountable on, an autonomous vehicle or an operator-controlled vehicle, such as a remote controlled vehicle or a manned vehicle.

The present disclosure relates to different aspects including the method described above and in the following, corresponding apparatus, systems, methods, and/or products, each yielding one or more of the benefits and advantages described in connection with one or more of the other aspects, and each having one or more embodiments corresponding to the embodiments described in connection with one or more of the other aspects and/or disclosed in the appended claims.

In particular, according to one aspect, disclosed herein are embodiments of an apparatus for for measuring insect activity in a geographic area, the apparatus comprising:

- a movable insect sensor configured to traverse at least a portion of target area and to acquire sensor data indicative of one or more insect detection events, each insect detection event being indicative of one or more detected insects in a detection volume of the movable insect sensor;

- a data processing system configured, based on the generated sensor data, an insect distribution map of the target area, the insect distribution map representing a plurality of respective subareas of the target area, each subarea having associated with it a respective amount of local insect activity in said subarea.

While embodiments of the process for measuring insect activity described herein only require a single movable insect sensor, it will be appreciated that some embodiments of the apparatus include multiple insect sensors, in particular multiple insect sensors traversing the target area, thus allowing a faster data acquisition.

According to another aspect, disclosed herein are embodiments of a computer-implemented method for measuring insect activity in a geographic area, the method comprising:

- receiving sensor data , acquired by a movable insect sensor while traversing at least a portion of a target area, the sensor data being indicative of one or more insect detection events, each insect detection event being indicative of one or more detected insects in a detection volume of the movable insect sensor;

- creating, based on the generated sensor data, an insect distribution map of the target area, the insect distribution map representing a plurality of respective subareas of the target area, each subarea having associated with it a respective amount of local insect activity in said subarea.

According to another aspect, disclosed herein are embodiments of a data processing system configured to perform steps of the computer-implemented method described herein. In particular, the data processing system may have stored thereon program code adapted to cause, when executed by the data processing system, the data processing system to perform the steps of the method described herein. The data processing system may be embodied as a single computer or as a distributed system including multiple computers, e.g. a client-server system, a cloud based system, etc. The data processing system may include a data storage device for storing the computer program and sensor data. The data processing system may directly or indirectly be communicatively coupled to the movable insect sensor and receive the acquired sensor data from the movable insect sensor. To this end, the data processing system may comprise a suitable wired or wireless communications interface, e.g. as described in connection with the communications interface of the insect sensors.

According to another aspect, a computer program comprises program code adapted to cause, when executed by a data processing system, the data processing system to perform the steps of the method described herein. The computer program may be embodied as a computer-readable medium, such as a CD-ROM, DVD, optical disc, memory card, flash memory, magnetic storage device, floppy disk, hard disk, etc. having stored thereon the computer program. According to one aspect, a computer-readable medium has stored thereon a computer program as described herein.

Additional aspects, embodiments, features and advantages will be made apparent from the following detailed description of embodiments and with reference to the accompanying drawings.

BRIEF DESCRIPTION OF THE DRAWINGS

Preferred embodiments will be described in more detail in connection with the appended drawings, where

   FIG. 1 shows a schematic view of an apparatus for measuring insect activity in a geographic area.
   FIG. 2 schematically illustrates an embodiment of a data processing system.
   FIGs. 3 and 4 schematically illustrate embodiments of an insect sensor.
   FIG. 5 schematically illustrates an example of sensor signals from a detector module of an embodiment of an insect sensor as described herein.
   FIG. 6 shows a flow diagram of an example of a method for measuring insect activity in a geographic area.
   FIG. 7 shows a schematic flow diagram of a computer-implemented method for creating an insect distribution map.
   FIG. 8 illustrates an example of detected insect detection events in a target area.
   FIG. 9 illustrates an example of sensor position data of an insect sensor traversing a target area.
   FIG. 10 schematically illustrates an example of a grid of subareas.
   FIGs. 11, 12 and 13A-C show examples of insect distribution maps.
   FIG. 14 illustrates different selections of subareas covering a target area.
   FIG. 15 schematically illustrates a process for selecting the size of the subareas used as a basis for the insect distribution map.
   FIGs. 16A-B illustrate and example of the resizing of subareas.

DETAILED DESCRIPTION

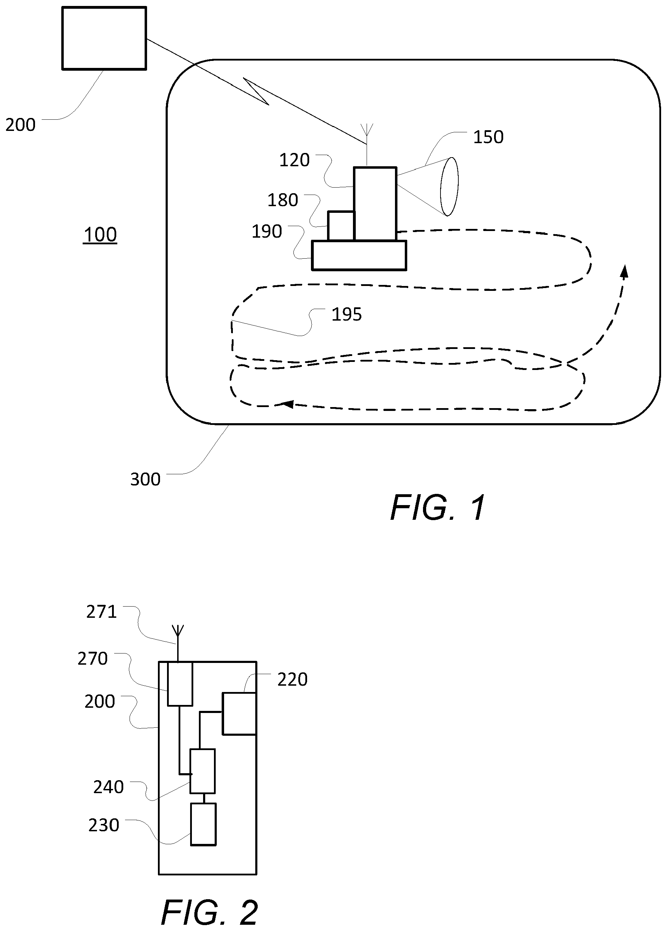

FIG. 1 shows a schematic view of an apparatus for measuring insect activity in a geographic area. The apparatus, generally designated by reference numeral 100, comprises a data processing system 200 and a movable insect sensor 120. The insect sensor 120 is configured to traverse a geographic target area 300 in which insect activity is to be measured. To this end, the movable insect sensor 120 may be integrated into or mounted to a movable support 190, e.g. on a vehicle such as a tractor, a movable farming machine, a spraying beam etc. It will be appreciated that alternative embodiments may include multiple insect sensors. It will be appreciated, that the number of insect sensors may be chosen depending on factors such as the size and variability of the geographic area, the desired accuracy spatial resolution of the insect distribution map, etc. For example, a moving platform or vehicle may have one or more sensors mounted on it, which may be considered together or separately. At any one time, each of these sensors might be in different grid squares. The centre of mass of the sensor group may be used, or the data from each sensor may be considered independently from each other. Alternatively, multiple movable insect sensors may traverse the target area separately from each other.

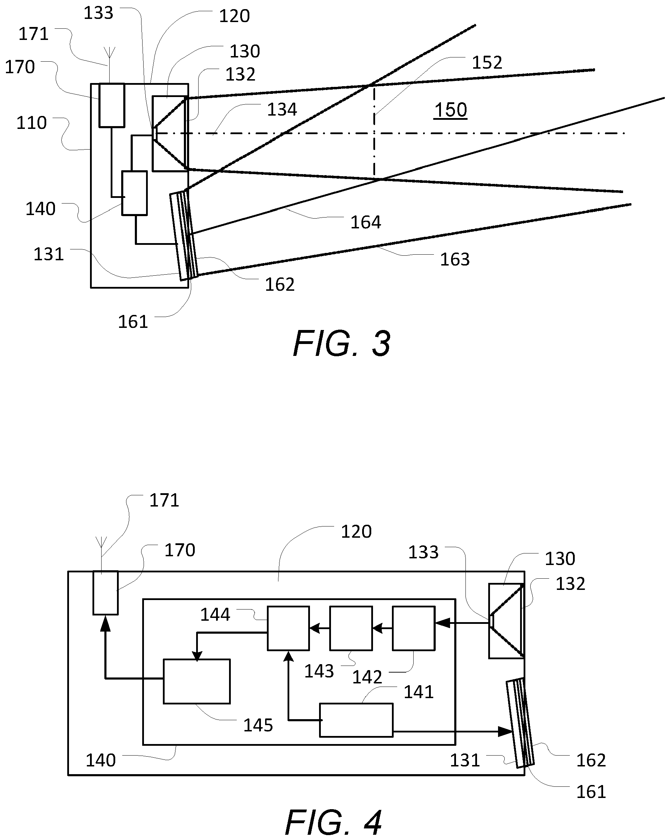

The insect sensor may be an optical insect sensor, an example of which will be described in greater detail with reference to FIG. 3 below.

As will be described in greater detail below, the insect sensor detects insects in a detection volume 150 in a proximity of the insect sensor. Accordingly, as the insect sensor moves and traverses the target area, the detection volume also moves and traverses the target area. Generally, the detection volume may be defined as the volume from which the insect sensor acquires measurements useful for detecting insects.

The target area 300 may be an agricultural field for growing crops, an area of forest or another geographic area. The target area is typically much larger than the horizontal extent of the detection volume, such as at least 10 times larger, at least 100 times larger, such as at least 1000 times larger. The insect sensor may traverse at least a portion of the target area along a trajectory 195. It will be appreciated that the insect sensor may visit certain parts of the target area multiple times while other parts may not be visited at all. Similarly, the speed, at which the insect sensor traverses the target area may be substantially constant or vary.

Generally, the insect sensor 120 acquires sensor data from which insect detection events can be detected. An insect detection event refers to the detection of one or more insects being present in the detection volume 150. Detection of an insect detection event may be based on one or more trigger criteria, e.g. based on a signal level of the detected sensor signal and/or on another property of the sensor signals sensed by the detector module of the insect sensor, e.g. in response to the received light from the detection volume.

In the example of FIG. 1, the insect sensor 120 or the movable support 190 comprises a position sensor 180, e.g. a GPS sensor, for tracking the position of the insect sensor while traversing the target area. Accordingly, the insect sensor or the movable support may record its position a respective times, e.g. at regular time intervals, e.g. so as obtain a sequence of time-stamped position coordinates. The insect sensor or the movable support may further store time-stamped operational data, e.g. whether the insect sensor is acquiring sensor signals, one or more quality indicators of the acquired sensor signals, etc., so as to allow a determination of the actual time during which the insect sensor acquires usable sensor data in respective portions of the target area.

The detection volume 150 associated with the insect sensor is preferably a detection volume external to insect sensor, located in the vicinity of the insect sensor. Examples of an insect sensor will be described in more detail below with reference to FIGs. 3 and 4.

The data processing system 200 is configured, e.g. by a suitable computer program, to receive sensor data from the insect sensor 120 and position data from the position sensor 180. The data processing system 200 is configured to process the received sensor data and the received position data to create an insect distribution map as described herein. To this end, the data processing system 200 is configured to execute a computer program for analysing the sensor data from the insect sensor and for creating an insect distribution map indicative of a spatial distribution of one or more desired quantities indicative of insect activity. The data processing system may output the created insect distribution map in a suitable form, e.g. on a display, on a storage device, via a data communications interface, and/or the like. The data processing system 200 may be a stand-alone computer or a system of multiple computers, e.g. a client-server system, a cloud-based system or the like. An example of a data processing system will be described in more detail below with reference to FIG. 2.

The insect sensor 120 is communicatively coupled to the data processing system 200 and communicates the collected sensor data and position data to the data processing system 200. To this end, the insect sensor may include a suitable communications interface. The communications interface may be a wired or a wireless interface configured for direct or indirect communication of sensor data to the data processing system. In the example of FIG. 1, the insect sensor communicates the collected sensor data via a cellular telecommunications network to the data processing system 200, e.g. via a GSM/GPRS network, USTM network, EDGE network, 4G network, 5G network or another suitable telecommunications network. In some embodiments, the communications interface may be configured for communication via satellite. It will be appreciated that the communication may be a direct communication or via one or more intermediate nodes, e.g. via the movable support. Similarly, the communication may use alternative or additional communications technologies, e.g. other types of wireless communication and/or wired communication. Yet further, the collected sensor data may be stored locally by the insect sensor or the movable support for subsequent retrieval from the insect sensor, e.g. after traversing the geographic area. To this end, the insect sensor or the movable support may include a local data storage device for logging the sensor data and for allowing the stored data to be retrievable via a data port or a removable data storage device.

It will be appreciated that the data acquisition is performed locally in the insect sensor. The remaining signal and data processing tasks may be distributed between the insect sensor 120 and the data processing system 200 in a variety of ways. For example, some or even all signal and/or data processing may be performed locally in the insect sensor. Similarly, some or even all signal and/or data processing tasks may be performed by the data processing system. For example, the identification of insect detection events from the sensor signals may be performed locally by the insect sensor while the creation of an insect distribution map from the insect detection events and from the sensor position information may be performed by the data processing system. Alternatively, the insect sensor may forward the sensor signals to the data processing system, which then performs the identification of insect identification events and the creation of the insect distribution map. Accordingly, depending on the distribution of processing tasks between the insect sensor and the data processing system, the sensor data communicated from the insect sensor to the data processing system may have different forms, e.g. raw or pre-processed sensor signals, event data indicative of identified insect detection events, optionally detected attributes associated with the insect detection events, and/or the like.

In some embodiments, the system comprises or is communicatively coupled to one or more additional sensors, such as one or more environmental sensors for sensing environmental data, such as weather data. The one or more additional sensors may be deployed in the geographic area 300. Examples of environmental data include ambient temperature, humidity, amount of precipitation, wind speed, etc. The one or more additional sensors may be included in the insect sensor 120, in the movable support 190, e.g. in a vehicle, or they may be provided as a separate unit, e.g. a weather station, that may be communicatively coupled to an insect sensor and/or to the remote data processing system.

FIG. 2 shows a schematic view of an example of a data processing system. The data processing system 200 comprises a central processing unit 240 or other suitable processing unit. The data processing system further comprises a data storage device 230 for storing program code, received sensor data and/or created insect distribution maps. Examples of suitable data storage devices include a hard disk, an EPROM, etc. The data processing system further comprises a data communications interface 270, e.g. a network adaptor, a GSM module or another suitable circuit for communicating via a cellular communications network or via another wireless communications technology. To this end, the data processing system may further comprise an antenna 271. It will be appreciated that the data processing system may include a wired data communications interface instead of or in addition to a wireless communication interface. The data processing system may receive sensor data from the insect sensor via one or more nodes of a communications network. The data processing system further comprises an output interface 220 e.g. a display, a data output port, or the like.

Examples of an insect sensor will now be described in more detail. In some embodiments, the insect sensor may be an optical insect sensor. In one embodiments, the insect sensor comprises:

- an illumination module configured to illuminate the detection volume with illumination light comprising light at a first wavelength band modulated at a first modulation frequency and light at a second wavelength band;
- a detector module comprising a detector configured to detect light from the detection volume.

The insect sensor may further comprise a processing unit configured to receive sensor signals from the detector module and to process the sensor signals for identification of one or more insect detection events. In some embodiments, the processing unit is configured to filter the received sensor signals to extract a first sensor signal modulated at the first modulation frequency. The processing unit may be configured to, based on at least the first sensor signal, detect at least one insect in the detection volume and, optionally, to determine at least one optically detectable attribute of the detected insect, such as a melanization ratio and/or a direction of movement. Accordingly, the insect sensor provides accurate measurements while maintaining a low optical complexity of the insect sensor. Embodiments of the insect sensor may allow accurate measurements of spectral reflectivity at one, two or more wavelengths, largely unaffected by background illumination such as sunlight, while still allowing a high temporal fill factor in one, two or more channels. Accordingly, the insect sensor is particularly useful for acquiring spatially resolved data for creating insect distribution maps, as the insect sensor is robust, relatively inexpensive and can easily be mounted on or integrated into a vehicle. Moreover, the insect sensor can be deployed and operated in a large variety of environmental conditions, thus allowing data to be collected across a large geographic area.

The illumination module may be configured to illuminate the detection volume with illumination light and the detector module may be configured to detect a backscattered portion of the illumination light, the backscattered portion being backscattered by insects moving about the detection volume. In particular, the detector module may be configured to record a temporal profile of the reflected/backscattered light, as the temporal profile of the reflected/backscattered light is a fingerprint of the insect, which can be used to distinguish between different types of insects.

At least in some embodiments, the detection volume is a three-dimensional detection volume from which the insect sensor obtains sensor input suitable for the detection of insects. The detection volume may thus at least partly be defined by the field of view and depth of field of the detector module. In particular, the detection volume may be defined as an overlap of the volume illuminated by the illumination module and by a volume defined by the field of view and depth of field of the detector module. At least in some embodiments, the detection volume extends outside the insect sensor. In particular, the detection volume may be an enclosure-free void allowing unrestricted movement of living airborne insects into and out of the void. To this end, the detection volume may be defined solely by the overlap of the illumination volume and the field of view and depth of field of the detector module.

The detection volume may have a predetermined shape, size and position relative to the illumination module and/or relative to the detector module, e.g. relative to an aperture and/or an optical axis of the detector module. In particular, during the entire detection process, the detection volume may be stationary relative to the detector module and to the illumination module, i.e. the detection volume traverses the target area together with the insect sensor. The detector module may comprise one or more lenses that define an optical axis of the detector module and and/or that define a focal length. The focal length may be fixed during the entire detection process. Moreover, the optical axis may be fixed, during the entire detection process, e.g. relative to the illumination module and/or relative to a housing of the insect sensor. However, it will be appreciated that the insect sensor may allow the size, shape and/or relative position of the detection volume to be pre-configured and adapted to a specific measurement environment, e.g. by changing a relative position and/or orientation of the illumination module and the detector module. The detector module may further comprise an aperture.

The detection volume may have a variety of shapes and sizes, such as box-shaped, cylindrical, ball-shaped, cone-shaped, pyramidal, frusto-conical, frusto-pyramidal, etc. In some embodiments, the detection volume has a size of at least 5 l, such as at least 10 l, such as at least 20 l, such as at least 0.1 m³, such as at least 0.2 m³, such as at least 0.5 m³, such as at least 1 m³, such as at least 2 m³, such as at least 3 m³. Even when the insect sensor has a relatively small detection volume, e.g. less than 100 l, a movable insect sensor may be deployed so as to allow the insect sensor to acquire spatially-resolved sensor data indicative of insect activity in a large geographic area.

In some embodiments, the detection volume has a size of less than 20 m³, such as less than 10 m³, such as at less than 5 m³, such as less than 1 m³, such as less than 100 l, thereby facilitating uniform illumination at high brightness of the entire detection volume while allowing for reliable detection of insects and/or attributes associated with the detected insects, e.g. one or more of the following attributes of insects: trajectories, wing beat frequencies, glossiness, melanization, body-wing ratio, relative or absolute total size, relative or absolute body size, relative or absolute wing size.

In some embodiments, the detection volume has an aspect ratio, e.g. defined as a ratio of a largest edge to a smallest edge of a minimum bounding box of the detection volume. In some embodiments, the aspect ratio is no larger than 10:1, such as no larger than 5:1, such as no larger than 3:1, such as no larger than 2:1. For example, the aspect ratio may be between 1:1 and 10:1, such as between 1:1 and 5:1, such as between 1:1 and 3:1, such as between 2:1 and 3:1. A low aspect ratio of the detection volume allows moving insects to be tracked over a relative long period of time, regardless of the direction of travel of the insects, thus allowing more accurate detection of different insects, e.g. flying or jumping insects, insects moving at different speeds, etc. Moreover, a relatively long observation time also increases the accuracy of the determined optically detectable attributes such as wing beat frequency, etc. The minimum bounding box may have a vertical and two horizontal edges. The vertical edge may be the smallest edge of the minimum bounding box. For example, a ratio between each of the horizontal edges and the vertical edge may be between 2:1 and 10:1, such as between 2:1 and 5:1, such as between 2:1 and 3:1.

The insect sensor may be configured to be deployed in a geographic area such that the detection volume may be elevated above the ground surface by a minimum vertical offset. To this end, the insect sensor may include or otherwise be configured to be mounted on a movable support structure. In some embodiments, the insect sensor and/or the support structure is/are configured such that the detection volume extends from a top of a vegetation canopy upwards. Accordingly, interference of the vegetation with the insect sensor, e.g. by blocking the light path, is thus avoided or at least reduced. To this end, the minimum vertical offset may be predetermined, e.g. configurable prior to use. To this end, the support structure may be adjustable so as to adjust a mounting height of the insect sensor, so as to adapt the minimum vertical offset to the vegetation in vicinity of the insect sensor. For example, the insect sensor may be mounted such that the vertical offset of the insect sensor above the ground surface is adjustable and/or such that the orientation of the insect sensor relative to the ground surface is adjustable. The size of the vertical offset may depend on factors such as the type, height and/or density of the vegetation growing in the area of land where the insect sensor is deployed and/or the type of insects to be detected. For example, the minimum vertical offset may be chosen between 10 cm and 5 m, such as between 20 cm and 3 m, such as between 20 cm and 2 m, such as between 50 cm and 2 m.

In some embodiments, the detection volume is located in a proximity of the insect sensor. In particular, the detection volume may extend between a proximal end and a distal end of the detection volume, relative to the insect sensor, e.g. relative to an aperture or other optical input port of the detector module. In some embodiments, the distal end may be no more than 5 m from the insect sensor, such as no more than 4 m, such as no more than 3 m. The proximal end may be separated from the insect sensor, e.g. from an aperture or other optical input port of the detector module, by 1 cm or more, such as by 10 cm or more, such as by 20 cm or more, such as by 30 cm or more.

Embodiments of the insect sensor described herein are particularly suitable for detecting airborne insects, such as flying or jumping insects. Embodiments of the insect sensor described herein allow for detection of insects moving within the detection volume during sufficiently long observation times so as to reliably identify and distinguish different optically detectable attributes, e.g. wing beat frequencies and/or a trajectories and/or body wing ratios and/or melanisation ratios and/or glossiness and/or relative or absolute total size and/or relative or absolute body size and/or relative or absolute wing size. Such techniques have been found to allow reliable detection and/or classification of individual insects.

In some embodiments, the illumination module comprises a light source that is configured to emit coherent or incoherent visible light and/or infrared and/or near-infrared light and/or light in one or more other wavelength bands. Infrared and/or near-infrared light (such as light in the wavelength band between 700 nm and 1500 nm, such as between 700 nm and 1000 nm) is not detectable by many insects, and thus does not influence the insect's behavior.

In some embodiments, the illumination module is configured to selectively illuminate the detection volume with light of one, two or more wavelength bands, in particular two or more mutually spaced-apart wavelength bands. To this end, the illumination module may include a first light source, e.g. comprising one or more LEDs, configured to selectively emit light of a first wavelength band. The illumination module may further include a second light source, e.g. comprising one or more LEDs, configured to selectively emit light of a second wavelength band, which may be spaced-apart from the first wavelength band. The illumination module may further include one or more further light sources, e.g. comprising one or more LEDs, configured to selectively emit light of one or more further wavelength bands, which may be spaced-apart from the first wavelength band and/or second wavelength band. The detector module may be configured to selectively detect the selected wavelength bands. In one embodiment, the illumination module is configured to emit light at a first wavelength band at 808 nm +/-25 nm and light at a second wavelength band at 970 nm +/- 25 nm.

Using more than one wavelength introduces the possibility to measure "colour", or melanin content of targets. Melanin absorption decreases with increasing wavelengths. By using two, or more, channels at well-separated wavelengths, and comparing the ratio of the received intensity at these two wavelengths, the melanin content can be estimated. For example, a possible measure indicative of the melanisation ratio may be expressed as the ratio $I_{\lambda 1}/(I_{\lambda 1}+I_{\lambda 2})$ or another measure of the relative detected intensity (denoted $I_{\lambda 1}$ and $I_{\lambda 2}$, respectively) at two wavelength bands around wavelengths $\lambda_1$ and $\lambda_2$, respectively. In one embodiment $\lambda_1$ = 808 nm and $\lambda_2$ = 970 nm.

In some embodiments, the insect sensor further separates the body and wing contribution of the recorded signal. Accordingly, the insect sensor may determine both body and wing melanisation in the insect. It also allows the insect sensor to more accurately estimate other features such as wingbeat frequency, since the apparatus can treat the signal received in each wavelength independently and get two separate measurements on the wingbeat frequency. If they for some reason do not agree, that insect detection event can e.g. be discarded as noise.

In some embodiments, the illumination module is configured to illuminate the detection volume with illumination light at the first wavelength band modulated at a first modulation frequency. The illumination module may further be configured to emit light at a second wavelength band, different from the first wavelength band, modulated at a second modulation frequency, different from the first modulation frequency. In one embodiment the light at the first wavelength band (e.g. at 808nm) is modulated at about 80kHz and the light at the second wavelength band (e.g. at 980nm) is modulated at about 120kHz. The detector module may thus be configured to detect light signals from the detection volume and to selectively filter the detected light signals with the first and/or second frequencies, respectively. In particular, the insect sensor may be configured to filter the received sensor signal to extract the first sensor signal modulated at the first modulation frequency and, optionally, a second sensor signal modulated at the second modulation frequency and, based on the first and second sensor signals, to detect at least one insect in the detection volume and to determine at least one optically detectable attribute of the detected insect, such as a melanisation ratio and/or a direction of movement.

The sensor signals may be modulation filtered by means of a lock-in amplifier or by means of another suitable electronic modulation filter for extracting signals modulated at a target modulation frequency. When the illumination light at different wavelength bands is also modulated at different modulation frequencies, the detector module can separate sensor signals relating to different wavelength bands into separate channels based on the modulation filtering.

Accordingly, the detector module may selectively detect the one or more respective wavelength bands with a single detector and efficiently suppress background light, such as daylight or light from light sources other than the illumination module. In particular, a detector module configured to selectively detect light at 808 nm and/or at 970 nm has been found to be suitable for detecting and distinguishing different type of insects, e.g. based on a ratio of backscattered light at the respective wavelength. It will be appreciated that alternative embodiments will include more than two wavelength bands, e.g. 3 or 4 or 5 or more wavelength bands, and the more than two wavelength bands may be modulated at respective modulation frequencies. The processing unit may thus be configured to filter the received sensor signal to extract a corresponding plurality of two or more than two sensor signals modulated at the respective modulation frequencies and, based on the more than two sensor signals, to detect at least one insect in the detection volume and to determine at least one optically detectable attribute of the detected insect.

In one embodiment, the selective filtering of the one or more modulation bands can be done effciently using phase sensitivity lock-in detection which further eliminates noise from other light sources. The detector module may be configured to obtain signals at a sampling rate of at least 1 MHz. A high sampling frequency (e.g. in the MHz range) facilitates the use of lock-in amplification which enables the ability to record two wavelengths on one diode and/or the suppression of background radiation.

Besides making it possible to distinguish signals at two wavelengths by a single detector, the modulation filter further ensures that only light with the right frequency and, optionally, the right phase can be detected by the detector module. This in turn ensures that the detector module is insensitive to light from other light sources such as the sun or other artificial sources. An efficient suppression of other light sources further ensures that sensor data acquired at different locations and at different times are comparable and allow computation of a standardized insect distribution map.

Alternatively, the detector module may otherwise be configured to selectively detect light at one or more predetermined wavelengths or one or more small wavelength bands. To this end, the detector module may comprise one or more light-sensitive sensors - e.g. one or more photodiodes, photodiode arrays or other image sensors - configured to selectively detect light at two or more wavelengths or small wavelength bands where the two or more wavelengths or wavelength bands are spaced apart from each other and do not overlap each other. This may e.g. be achieved by a light-sensitive sensor where respective bandpass filters are selectively and alternatingly positioned in front of respective light-sensitive areas of the sensor. Alternatively, the detector module may include two or more separate light-sensitive sensors, each configured to detect light at a respective wavelength or wavelength band.

A convenient illumination of a relatively large detection volume, in particular a simultaneous illumination of the entire detection volume, with a compact illumination module, may e.g. be provided when the illumination module is configured to emit a diverging beam of light, in particular a beam of light having a divergence angle in at least one direction of between 2° and 45°, such as between 10° and 30°, or between 35° and 45°, measured as a full angle between rays originating from the light source and intersecting opposite ends of a beam diameter.

The illumination module may e.g. include one or more optical elements, such as one or more reflectors and/or one or more lenses that direct the light from the light source as a beam of light, such as a diverging beam of light, of a suitable cross-sectional shape towards the detection volume. For example, the beam of light may have a rectangular or round, e.g. oval or circular, cross section. Accordingly, the detection volume may have a frusto-conical or frusto-pyramidal shape.

In some embodiments, the detector module comprises an imaging system, such as a camera. The imaging system includes an optical lens configured to image an image plane onto an image sensor, e.g. a quadrant Silicon detector or an image sensor having a lower or higher resolution. In some embodiments, the image plane is located between 1 m and 5 m, such as between 1 m and 4 m, such as between 1.5 m and 3 m in front of the optical lens. The imaging system is arranged such that the field of view of the imaging system overlaps, or even substantially coincides, with the illuminated volume at least at said image plane. The imaging system may have a field of view and a depth of field large enough to record images of the entire detection volume, in particular sufficiently focused images to allow detection of the optically detectable attributes. The imaging system may be configured to detect disturbing events, e.g. larger animals or plants crossing the detection volume. The imaging system may also serve as a detector for detecting background radiation. In some embodiments, the sensor signals recorded by the image sensor may be used to detect insects and/or for detecting airborne trajectories of the insects, detecting wing beat frequencies and/or other attributes. The airborne trajectories are also examples of optically detected attributes that may serve as input to the classification of insects.

In some embodiments, the detector comprises one or more photo diodes, e.g. an array of photodiodes which may even form an image sensor. Individual photodiodes that receive light from the entire detection volume or from a part of the detection volume allow for a fast time-resolved detection of changes in the intensity of backscattered light. Such signals may be used to determine wing beat frequencies and/or other attributes of flying insects which, in turn, may be used to detect the presence of insects and, optionally, to distinguish between different types of insects based on properties of the wing beat patterns, e.g. the relative amplitudes of multiple frequencies in a frequency spectrum associated with a detected insect event, and/or based on a combination of one or more other attributes. In some embodiments, the detector module comprises an array of photodiodes, the photodiodes configured to receive light from respective parts of the detection volume, e.g. a linear or other 1D array or a 2D array, or another form of 2D image sensor that allows a spatially resolved detection of light impinging on different areas of an image plane. The detector module may be configured to direct light from different sub-volumes of the detection volume onto respective photo-diodes of the array or onto respective areas of a 2D image sensor, thus allowing a space-resolved detection of insects. In some embodiments, the array of photosensitive elements comprises no more than 128 photodiodes, such as no more than 64, such as no more than 25, such as no more than 16, such as no more than 9, such as no more than 4 photodiodes.

The processing unit may be configured to process the received sensor signals so as to detect one or more insect detection events and to extract one or more optically detectable attributes associated with the detected insect detection events. The processing may include one or more of the following: amplification, A/D conversion, filtering, calibration, feature detection, frequency analysis, calculation of attributes and/or the like.

In particular, the processing unit may process the sensor signal so as to detect one or more signal features indicative of the presence of one or more insects in the detection volume. The processing unit may further be configured to count the number of detected insect detection events, e.g. within a predetermined time period, a sliding window or the like, so as to determine an estimate of an amount of insects detected in the detection volume, e.g. as a number of insects detected in the detection volume, e.g. per unit time and/or per unit volume. Accordingly, the processing unit may output processed sensor data representing the respective insect detection events.

In some embodiments, the processing unit is configured to extract one or more optically detectable attributes associated with the detected insect detection events. The optically detected attributes may include one or more optically detectable attributes that can be determined from the sensor signals acquired by the optical insect sensor. Examples of optically detectable attributes include: one or more wing beat frequencies, a body-towing ratio, a melanisation ratio (colour), a detected trajectory of movement of an insect inside the detection volume, a detected speed of movement of an insect inside the detection volume, an insect glossiness, a relative or absolute size of the insect or of one or more parts of the insect, e.g. a relative or absolute body size, a relative or absolute wing size, or the like. In some embodiments, the optically detected attributes include a representation of light intensities associated with the insect detection event. The representation of light intensities may include a time-resolved and/or frequency-resolved representation, one or more features of a time-resolved and/or frequency-resolved representation, a processed version of a recorded time-resolved and/or frequency-resolved representation, and/or the like. For example, the representation may include time-resolved intensities at one or respective wavelength bands. Suitable features of a representation may include one or more locations of maxima and/or minima of the representation, one or more maximum or minimum values of the light intensity, locations, sizes and/or widths of one or more detected peaks in the representation and/or other detectable features. Examples of a processed version of a recorded time-resolved and/or frequency-resolved representation include a compressed version, an encoded version, an auto-encoded version and/or a dimensionally reduced version of the recorded time-resolved and/or frequency-resolved representation. In some embodiments, the classification of insects of different types or the computation of the another quantity associated with insect activity is based on a combination of two or more optically detectable attributes. The sensor data from the insect sensor may be indicative of an amount, e.g. a number, of detected insects detected in the detection volume during a sampling period. The sensor data may include one or more optically detected attributes associated with each detected insect detection event and/or another suitable representation of the detected attributes, e.g. a distribution of attributes detected during a sampling period. It will be appreciated that, in some embodiments, the sensor data may include unprocessed or only partially processed data, e.g. time-resolved detected light intensities or spectra from which one or more optically detectable attributes may be extracted or which itself may serve as optically detected attributes.

The detection and/or identification of insects based on wing beat frequencies, melanisation ratios and insect glossiness is described in more detail in WO 2017/182440 and in Gebru et. Al: "Multiband modulation spectroscopy for the determination of sex and species of mosquitoes in flight", J. Biophotonics. 2018. While the above documents describe these indicators in the context of a LIDAR system using the Scheimflug principle and in the context of classification of insects, the present inventors have realized that attributes extracted by these techniques may also be applied to insect sensors based on other light sources that illuminate an extended volume rather than a narrow laser beam. For example, WO 2017/182440 discloses a laser-based LIDAR system for detecting aerial fauna. Such a LIDAR system for aerial fauna utilizes a collimated laser beam that is transmitted relatively far into the atmosphere, and a receiver/detector measures the backscattered laser light from insects. While such an instrument is able to collect a large number of recordings, LIDAR systems are generally alignment sensitive and they require high-power lasers in order to provide a sufficiently long-range laser beam of sufficient intensity. Accordingly, such a system requires careful installation and operation of a high-power laser typically requires supervision and may thus be less preferred for operation in e.g. urban areas or as movable insect sensors.

The detection and/or identification of insects based on a detected trajectory may be based on the method described in international patent application WO 2020/043841 or on another suitable method for detecting a trajectory of an airborne insect. The detected trajectory may include a representation of the trajectory and/or a representation of one or more attributes of the detected trajectory. The detection and/or identification of insects based on one or more attributes of the trajectory, e.g. an altitude of the trajectory, a bearing of the trajectory, a bearing in relation to wind direction, a directional consistency, etc. or a combination of the above.

It will be appreciated that, in some embodiments, some or all of the processing steps having been described as being performed by the processing unit of the insect sensor may instead be performed by a data processing system external to the insect sensor, i.e. the processing steps may be implemented in a device or system external to the insect sensor or they may be distributed between a local processing unit of the insect sensor and a remote data processing system, separate from the insect sensor. For example, in such embodiments, the local processing unit of the insect sensor may output sensor data representing the detected sensor signals, optionally suitably pre-processed, and the external data processing system may further process the sensor signals so as to extract the optically detectable attributes. The external data processing system may be separate from a data processing system that performs the computation of the insect distribution map or it may be integrated therein.

FIG. 3 schematically illustrates an embodiment of an insect sensor. The insect sensor, generally designated by reference numeral 120, comprises a processing unit 140, a detector module 130 and an illumination module 131, all accommodated within a housing 110. In this example, the illumination module and the detector module are vertically aligned with each other and the illumination module is arranged below the detector module. However, other arrangements are possible as well.

Generally, in order to maximize the amount of backscattered light from insects inside the detection volume 150, it may be preferable to position the illumination module adjacent or otherwise close to the detector module, such that the illumination direction and the viewing direction only define a relatively small angle between them, e.g. less than 30°, such as less than 20°. In some embodiments, the illumination module is configured to emit a beam of light along an illumination direction, and the detector module defines a viewing direction, e.g. as an optical axis of the detector module, wherein the illumination direction and the viewing direction define an angle between each other, the angle being between 1° and 30°, such as between 5° and 20°.

The illumination module comprises an array of light-emitting diodes (LEDs) 161 and a corresponding array of lenses 162 for directing the light from the respective LEDs as a diverging beam 163 along an illumination direction 164. The array of light emitting diodes may comprise a first set of diodes configured to selectively emit light at a first wavelength band, e.g. at 808 nm +/- 25 nm. The array of light emitting diodes may further comprise a second set of diodes configured to selectively emit light at a second wavelength band, different from the first wavelength band, in particular spaced-apart from the first wavelength band, e.g. at 970 nm +/- 25 nm. In other embodiments, the array of light emitting diodes may include alternative or additional types of LEDs or only a single type of LEDs. For example, in some embodiments, the LEDs may be configured to emit broad-band visible, near-infrared and/or infrared light.

The detector module 130 comprises an optical system 132 in the form of a Fresnel lens. Alternative another lens system may be used, e.g. an NIR coated aspheric lens, e.g. having 60 mm focal length and an ø 76.2 mm aperture. The detector module 130 includes an optical sensor 133, e.g. one or more photodiodes, such as an array of photodiodes, a CCD or CMOS sensor and the optical system directs light from the detection volume onto the optical sensor. In some embodiments, the optical system images an object plane 152 inside the illuminated volume onto the optical sensor. The field of view of the optical system and the depth of field of the optical system are configured such that the optical system directs light from a portion of the volume illuminated by the illumination module onto the optical sensor. The portion of the illuminated volume from which the optical system receives light such that it can be detected by the optical sensor and used for detection of insects defines a detection volume 150. The optical system 132 defines an optical axis 134 that intersects with the illumination direction 164, preferably at a small angle, such as 10°.

For example, when an optical system is based on a camera lens having f=24mm, f/2.8 and an optical sensor includes a ⅝" image sensor, the detector module may be configured to focus on an object plane at 2 m distance from the lens, corresponding to a field of view of approximately 1.7 m x 1.7 m and a depth of field of approximately 1.3 m, thus resulting in a detection volume of approx. 3.7 m$^3$.

The detector module 130 is communicatively coupled to the processing unit 140 and forwards a sensor signal indicative of the captured radiation by the optical sensor 133 to the processing unit. The processing unit 140 may include a suitably programmed computer or another suitable processing device or system. The processing unit receives the sensor signal, e.g. an image or stream of images and/or one or more sensed light intensities from respective one or more photodiodes and, optionally, further sensor signals from the detector module. The processing unit 140 processes the received sensor signals so as to detect and identify insects in the detection volume and output sensor data indicative of detected insect detection events and associated optically detectable attributes.

FIG. 4 schematically illustrates a more detailed view of an example of an insect sensor. The insect sensor 120 of FIG. 4 is similar to the insect sensor of FIG. 3 and comprises a processing unit 140, a detector module 130 and an illumination module 131, all accommodated within a housing 110 and all as described in connection with FIG. 3. In this example, the illumination module 131 includes an array of light emitting diodes (LEDs). The LEDs may be arranged in a 2D pattern, such as on a regular 2D grid. The LEDs may be distributed over an area of at least 10 cm$^2$, such as at least 30 cm$^2$, such as at least 60 cm$^2$, such as at least 80 cm$^2$. In some embodiments, the LEDs may be distributed over an area between 10 cm$^2$ and 400 cm$^2$, such as between 30 cm$^2$ and 300 cm$^2$, such as between 40 cm$^2$ and 200 cm$^2$, such as between 60 cm$^2$ and 120 cm$^2$, e.g. about 90 cm$^2$. Accordingly, an illumination beam having a large cross-sectional area may be emitted so as to illuminate a large volume simultaneously. The light emitted from each diode may be partially collimated by an asymmetrical lens to form a diverging beam, e.g. expanded with 40° and 8° diverging angles in the vertical and horizontal axis, respectively (measured as full divergence angles). The array of LEDs may all emit the same wavelength band or be arranged in such a way as to mix multiple wavelengths. In one example, the illumination module emits light at two different narrow wavelength bands, i.e. a first band at a first wavelength and a second band at a second wavelength, such as at 808 nm and 970 nm, respectively. Other embodiments may include a single type of LEDs or more than two different types of LEDs. The light from the illumination module is modulated at one or at multiple respective frequencies, e.g. the light at each wavelength may be encoded with a unique frequency. In one example, the light at the first wavelength is modulated at a first modulation frequency and the light at a second wavelength is modulated at a second modulation frequency, different form the first modulation frequency. The first and second modulation frequencies may each be selected between 10 kHz and 500 kHz, such as between 50 kHz and 200 kHz. In one example, the first modulation frequency is about 80 kHz and the second modulation frequency is about 120 kHz. To this end, the processing unit includes a synchronization circuit 141 having a clock for controlling the illumination module.

The detector module 131 includes an image sensor 133 including a 2x2 array of light-sensitive elements, such as photodiodes. In one particular embodiment, the image sensor is a quadrant detector with four individual Si photodiodes arranged in a square. It will be appreciated that other embodiments may include a larger array of light-sensitive elements or a smaller array or light sensitive elements, such as a 2x1 array, or even a single light sensitive element. The optical system 132 is arranged relative to the photodiode sensor array in such a way as to image an image plane within the detection volume onto the photodiode array. The four light-sensitive areas thus collect light from four substantially separate sub-volumes of the detection volume.

The detected signals from the photodiode array 133 are fed into the processing unit 140. The processing unit includes an amplifier bank 142 with a number of amplifiers matching the size of the photodiode array. In this example, the amplifier bank includes four transimpedance amplifiers. The amplified signals are fed into a corresponding A/D converter bank 143 which includes a number of A/D converters corresponding to the size of the photodiode array, such as four A/D converters. The A/D converter bank 143 generates respective digital time-resolved signals for the individual photodiodes. The processing unit further comprises a de-multiplexer circuit 144, e.g. an FPGA implementing a number of digital lock-in amplifiers corresponding to the size of the photodiode array and to the number of wavelengths. In one example, the de-multiplexer circuit implements eight lock-in amplifiers corresponding to the four quadrants of the quadrant detector and two individually modulated wavelengths. The de-multiplexer circuit 144 de-multiplexes the signals from each of the photodiodes into separate signals, optionally into separate signals for the respective wavelengths, i.e. for each photodiode, the de-multiplexer circuit generates one signal for each individually modulated wavelength. To this end, the de-multiplexing circuit receives a clock signal from the synchronisation circuit 141. The lock-in amplifiers further serve as an efficient filter for light not modulated with frequencies around the two lock-in frequencies.

The resulting de-multiplexed signals thus include one or more, e.g. two, wavelength-specific channels for each photodiode, e.g. 2x4 channels. It will be appreciated that, in embodiments with a different number of wavelengths or a different array size, the number of de-multiplexed signals will generally be different. The de-multiplexed signals are forwarded to a data processing circuit 145 which processes the individual signals to detect insects being present in the detection volume, i.e. to detect insect detection events, and to determine one or more attributes of each detected insect. To this end, the data processing circuit 145 may initially perform a calibration of the signal, e.g. based on stored calibration data, such as stored offsets and/or multiplicative factors. The data processing circuit outputs sensor data indicative of the insect detection events and the associated determined attributes. The data processing circuit may further log sensor data associated with multiple insect detection events. The data processing circuit may intermittently, e.g. periodically, upon request, or when the internal log buffer is about to be full, communicate the recorded sensor data via the communications interface 170 to a remote data processing system as described herein.

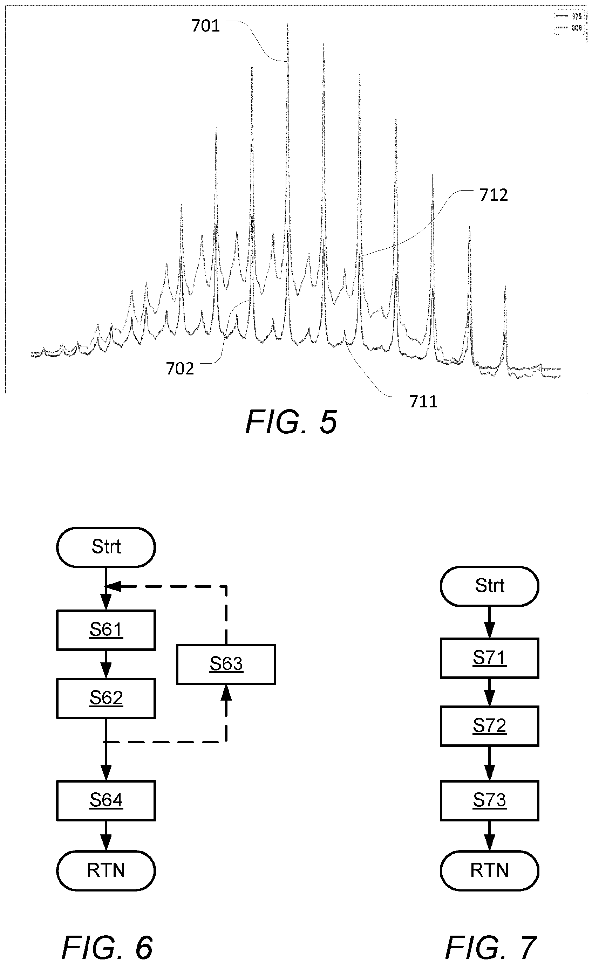

FIG. 5 schematically illustrates an example of de-multiplexed sensor signals from a detector module of an embodiment of an insect sensor as described herein, e.g. an insect sensor as described in connection with FIGs. 3 or 4. In this example, the sensor signals from the detector module includes respective time series of detected light intensities at two narrow wavelength bands, e.g. as recorded by respective photodiodes provided with respective bandpass filters or by one of the photodiodes of the array of FIG. 4. In some embodiments the signal may be integrated or otherwise combined from multiple photodiodes, from an image sensor and/or the like.

In this example, time series 701 corresponds to detected light at 808 nm while time series 702 corresponds to detected light at 970 nm. However, other embodiments may use other wavelengths and/or more than two wavelengths or wavelength bands.

The processing unit of an insect sensor may process the time series to detect the presence of an insect in the detection volume and to determine one or more attributes of the detected insect. Alternatively, some or all of the signal and data processing may be performed by a data processing system external to the insect sensor.

In the present example, the process implemented by the processing unit and/or an external data processing system may detect the presence of detected radiation above a predetermined threshold and/or determine a fundamental harmonic of the detected frequency response so as to detect the presence of an insect, i.e. to identify an insect detection event.

For example, in one embodiment, the processing unit of the insect sensor records data for a given interval (e.g. an interval between 1 s and 600 s), extracts events and metadata and then starts a new recording. The recorded data may include respective time series of the de-multiplexed channels of sensor signals.

To extract the events from the recorded raw data, the process estimates a rolling temporal mean and standard deviation. To this end, in each window, the data is reduced by a factor 10 before the mean and standard deviation is calculated.

An event threshold is then defined by multiplying the estimated standard deviation with a signal to noise factor (SNR), resulting in a threshold map representing the data of the respective channels.

Finally, the estimated rolling mean is removed from the signal and the events are extracted by applying the threshold map. The data associated with the extracted events are stored on the insect sensor and uploaded, e.g. via cellular connection, to a cloud database or other suitable data repository as soon as a connection is available. In cases where no cellular or other data connection is available, it is possible to store the extracted events locally on the insect senor device.

A process implemented by a cloud service or another type of data processing system external to the insect sensor, e.g. data processing system 200 of FIGs. 1 and/or 2, may perform data processing of the recorded data associated with the detected insect detection events. It will be appreciated, however, that some or even all of the subsequent processing may also be performed locally on the insect sensor.

In any event, the process may compute one or more attributes of the insects associated with the detected insect events. Examples of such attributes include a fundamental wing beat frequency (WBF), a body-wing ratio (BWR) and a melanisation ratio (MEL).

For example, the process may compute the fundamental wing beat frequency (WBF) from the determined fundamental harmonic of the frequency response of a detected detection event. The process may compute the body-wing ratio as a mean ratio between a wing and body signal. The body signal may be determined as a baseline signal 711 of a detection event which represents the scattering from the insect with closed wings while the wing signal may be determined as the signal levels 712 at the peaks in scattering.

The melanization ratio may be determined as a mean ratio between the signal strengths of the two recorded channels during a detection event.

Based on respective sets of one or more of the above attributes, associated with a plurality of insect detection events, optionally in combination with other parameters, a data processing system may compute an insect distribution map.

Generally, embodiments of the insect sensor described herein provide a detection volume that is large enough for the detector module to observe a number of insects representative for the population density in the area. The detection volume is also small enough to be sufficiently uniformly illuminated so as to provide high signal strength at the image sensor.

Moreover, embodiments of the apparatus described herein provide fast observation times, e.g. so as to reliably detect insects even in situations of high insect activity. Moreover embodiments of the apparatus described herein provide long enough observation times to be able to reliably determine attributes of the flying insects.

FIG. 6 shows a flow diagram of an example of a method for measuring insect activity in a geographic area.

In step S61, a movable insect sensor acquires sensor data while the insect sensor traverses at least a portion of a geographic target area for which an insect distribution map is to be prepared. The sensor data is indicative of detected insects, in particular airborne insects, detected in a detection volume of the insect sensor. The sensor data is thus indicative of respective insect detection events. Each insect detection event is associated with a current position of the detection volume within the target area, i.e. with a current position of the insect sensor. As the insect sensor traverses at least a portion of the target area, the sensor data represents a plurality of insect detection events associated with respective positions within the target area. The sensor data may include time information indicative of the detection time of respective insect detection events. The insect sensor communicates the sensor data to a data processing system for further processing. The data processing may be external to the insect sensor, e.g. as described in connection with FIG. 1, or it may be integrated with the insect sensor.

The process may further acquire sensor position data indicative of the position of the insect sensor within the target area at respective times. Accordingly, based on the sensor position data and the detection times, the process may associate each insect detection event with a corresponding detection position at which the insect detection event has been detected. Alternatively, the process may associate insect detection events with respective positions in a different manner.

The process may obtain additional information from the insect sensor, e.g. information indicative of one or more attributes associated with respective detection events, e.g. information about a type of insect having been detected or attributes from which the type of insects can be derived or estimated. Alternatively or additionally, the process may receive information indicative of an operational state of the insect sensor at respective times and/or at respective positions. The information indicative of the operational state may include information about whether the insect sensor is currently acquiring sensor data, information about a current signal-to-noise ratio or other indicators indicative of a current signal quality.

In step S62, the process creates an insect distribution map based on the sensor data from the movable insect sensor and from the acquired sensor position data. Optionally, the creation of the insect distribution map may be based on additional input, e.g. information of positions, size and/or shape of agricultural fields relative to the target area, environmental data, and/or the like. An example of the creation of an insect distribution map will be described in greater detail with reference to FIG. 7.

Optionally, in step S63, the process may compute information indicative of portions of the target area that have not yet been traversed or that should further be traversed by the insect sensor in order to refine the insect distribution map. For example, the process may identify portions of the target area where a higher resolution of the insect distribution map is desirable, e.g. because the current resolution is lower than desired, or because portions of the target area have a particularly high or a particularly low insect activity causing a higher-resolution mapping of these particular portions to be desirable. The information may be provided in the form of a map or in another suitable form that may be used by an operator of the insect sensor and guide the operator to control movement of the insect sensor. Alternatively or additionally, the process may output control data that can be used to automatically control movement of the insect sensor. Lowering the speed of the vehicle carrying the insect sensor, or passing over the same area multiple times, increases the amount of time spent in each subarea and thus increases the reliability of data collected.

In any event, based on the information, the process may return to step S61 and the insect sensor may again traverse at least a portion of the target area. In subsequent renewed execution of step S62, the process may then create a refined insect distribution map.

In any event, in step S64, the process outputs the created insect distribution map in a suitable manner, e.g. by printing the insect distribution map, by displaying the insect distribution map on a display or by outputting a representation of the insect distribution map suitable for import into another computer application, e.g. a GIS system, an agricultural planning system and/or the like.

FIG. 7 shows a schematic flow diagram of a computer-implemented method for creating an insect distribution map. In initial step S71, the process receives sensor data that has been acquired by a movable insect sensor while traversing at least a portion of a target area. The process further receives position data indicative of positions of the insect sensor at respective times.

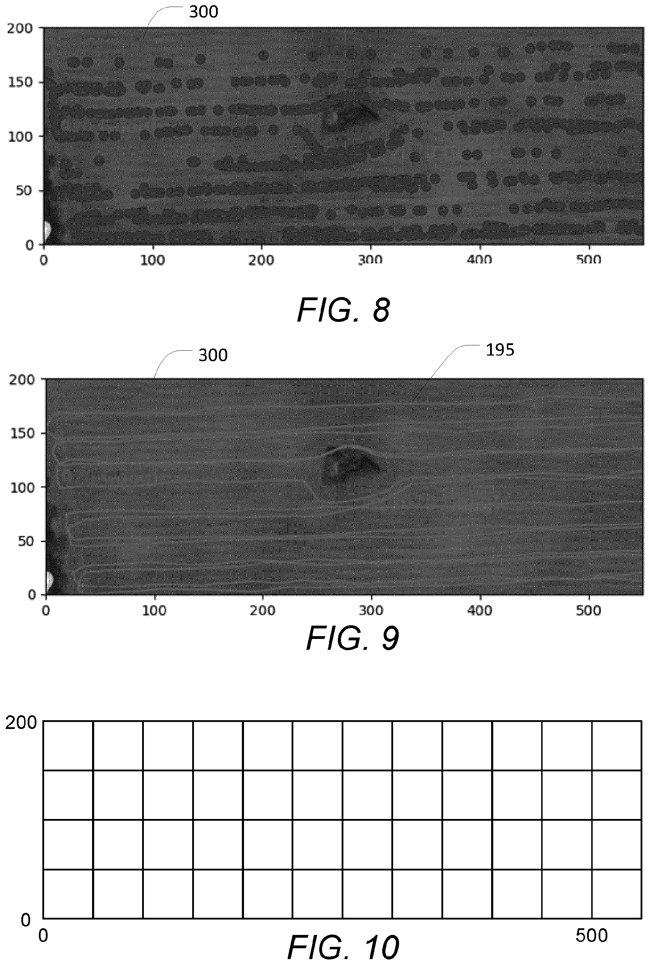

FIG. 8 illustrates an example of detected insect detection events in a target area 300. In this example, the target area is an agricultural field. Each insect detection event is marked by a dot, where each dot represents a position within the target area at which an insect has been detected by the insect sensor. As described above, the mapping of the insect detection events to positions within the target area may be based on time-resolved sensor position data in combination with time stamped insect detection events.

FIG. 9 illustrates an example of sensor position data of an insect sensor traversing a target area 300, in this example the agricultural field of FIG. 8. For example, the sensor position data may be represented as a sequence of time-stamped position coordinates, such as GPS coordinates. In FIG. 9, the position coordinates have been interpolated so as to obtain an estimated trajectory 195 along which the insect sensor has moved within the target area.

Again referring to FIG. 7, in step S72 the process selects a set of subareas, e.g. a regular grid of subareas such as a square grid aligned with the boundaries of the target area, as schematically illustrated in FIG. 10. The size of the subareas may be predetermined or selected by the process. Moreover, in the example of FIG. 10, all subareas are squares and have the same size. However, in other embodiments the set of subareas may include subareas of different shapes and/or sizes. An example of selection of a set of subareas will be described in more detail below.

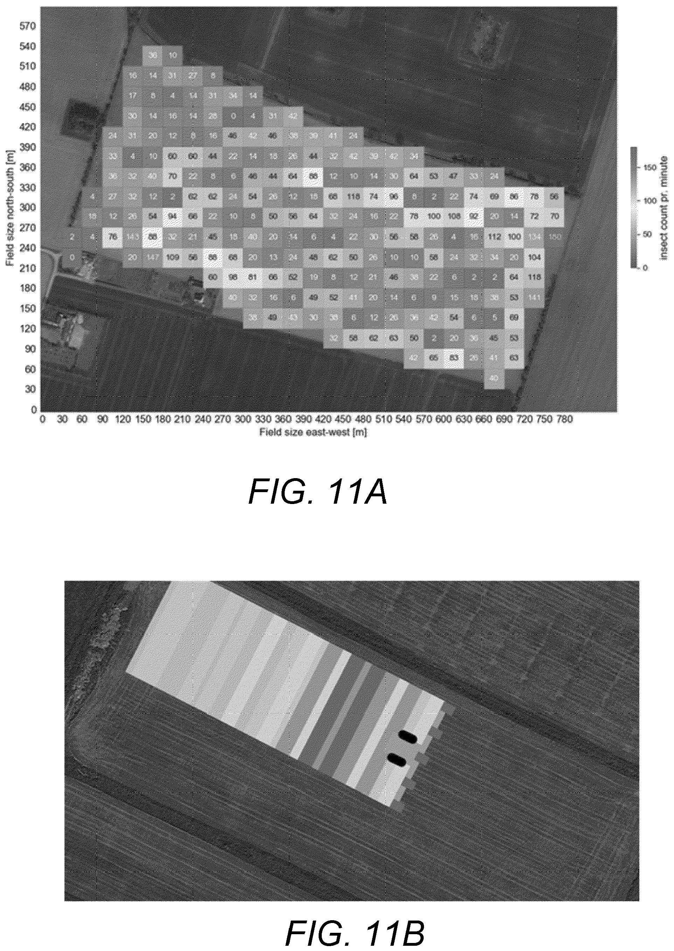

For example, the target area may be broken into equal grid squares, e.g. as illustrated in FIG. 11, or produced dynamically and in response to the movement of the vehicle, e.g. in a 'paintbrush-stroke' over the field, e.g. as schematically illustrated in FIG. 12. This 'paintbrush-stroke' map may be generated live during the traversing of the field, or it may be produced after a traversing session has been completed. The size of each subarea, whether this is grid square or blocks following the tractor 'paintbrush' may depend on how many insects are present, or the speed of the tractor, or agronomy-driven sizes based on how much precision spraying is possible, or other factors. A degree of calculated uncertainty may also be used to determine grid size. These grid sizes may be all equal or they may have different sizes.

In step S73, the process computes, for each subarea, the number of insect detection events in said subarea, time-compensated for the period of time the insect sensor has spent acquiring sensor data in said subarea and, optionally, normalized by the size of the subarea. Accordingly, each subarea may be associated with an insect count per unit time (e.g. per second) or an insect count per unit time and per unit area (e.g. count $/(\text{s} \cdot \text{m}^2)$). The process then represents the thus computed time-compensated insect counts as an insect distribution map where each subarea represents its associated time-compensated insect count. For example, different insect counts may be represented as different colors, grey values in a greyscale, or in another suitable manner.

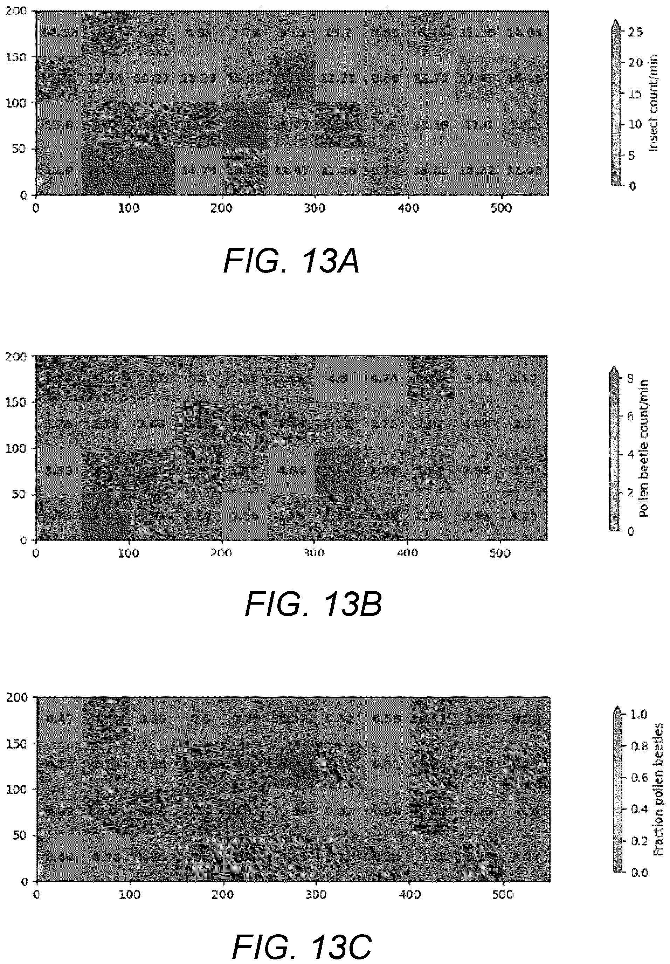

FIGs. 11, 12 and 13A-C show examples of resulting insect distribution maps. The insect distribution maps of FIGs. 13A-C have been computed from the measurement data illustrated in FIGs. 8 and 9.

While FIG. 13A shows an insect distribution map indicating the total insect activity in the respective subareas, the process may create other types of insect distribution maps, e.g. insect distribution maps for particular types of insects, such as for particular insect species. As described above, the insect sensor may classify the insect detection events into respective types of insects, e.g. based on optically detectable attributes of the sensor signals associated with the insect detection events, e.g. based on a detected melanisation ratio, a detected wing-beat frequency and/or the like.

FIG. 13B shows an example of a species-specific insect distribution map, illustrating the time compensated counts of a particular insect species, in this example pollen beetle, in the respective subareas of the target area of FIGs. 8 and 9. FIG. 13C shows an insect distribution map illustrating the fraction of a particular insect species, in this example pollen beetle, of the total observed time-compensated insect count. Species-specific insect distribution maps permit avoiding spraying pesticide in areas with a higher beneficial insect activity, and for targeting areas with a high pest insect activity.

Weighting factors may also be used for calculating the reported activity value which adjust for any of the following: the instantaneous speed of the vehicle, any aggregated measures of the speed of the vehicle (average, max, min), the model or brand of the vehicle, any attachments which may be added to the vehicle and their configuration, the configuration of the sensors on the vehicle, the crop type, the crop age/growth stage, the frequency and/or degree to which the field is disturbed (or any other factors).

The generated map may then be used as a resource in and of itself, for example advising farmers where to scout for target insects, or to show the effect of using targeted control techniques, or identifying the nest location of a target insect, etc. It may additionally or alternatively be used to load into a smart sprayer such that targeted precision spraying can be used to spray only in areas of high activity, either immediately after or at a later date.

Generally, the size and shape of the subareas used as a basis for the insect distribution may influence how well the insect distribution map reflects the actual spatial distribution of insects. In particular, as is illustrated in e.g. FIG. 8, the insect sensor may traverse the target area in an irregular pattern or at varying speed. Consequently, insect sensor may spend different amounts of time in different parts of the target area. Apart for compensating for these irregularities by computing time compensated insect counts for the respective subareas, it may further be beneficial to properly select the size of the respective subareas. In particular, the process may select the size of the subareas such that the time spent by the insect sensor acquiring sensor data in each subarea is at least a minimum amount of time. The minimum amount of time may be predetermined or it may be dynamically determined by the process.

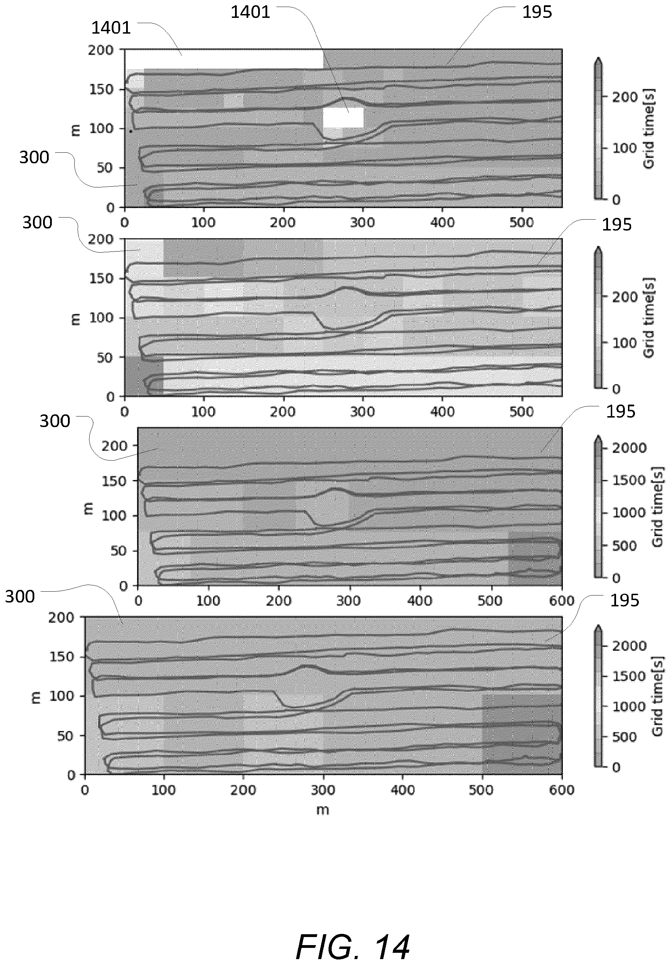

FIG. 14 illustrates different selections of subareas covering a target area 300. As in FIG. 8, FIG. 14 shows a trajectory 195 of a movable insect sensor having traversed a target area 300 while acquiring sensor data. Specifically, FIG. 14 illustrates four different selections of grids of subareas of respective sizes, where the size of the subareas increases from the top example to the bottom example. For each grid of subareas, the time spent in each subarea is indicated.

As can be seen from the upper example, when the subareas are selected too small, there will be subareas that have not been traversed by the insect sensor at all. In FIG. 14, these subareas are indicated by reference numeral 1401. Increasing the size of the subareas provides subareas such that the insect sensor has spent more time in each subarea, thus providing an increased reliability or statistical significance of the resulting insect count for the individual subareas. However, increasing the size of the subareas also decreases the spatial resolution of the insect distribution map.

Moreover, the sensor data acquired by the movable insects sensor is strongly event-based and is also affected by, for example, the speed of the vehicle the sensor is mounted on, as well as the number of sensors present, the total measurement volume, the shape of the measurement volume etc. The final presented value of the number of insect detection events in a subarea of the insect distribution map may be aggregated as an adjusted rate of events/minute, but it may also be scaled according to vehicle speed, number of sensors, etc.

The movable insect sensor may only have traversed a part of the target area and/or the insect sensor may have traversed some parts multiple times or otherwise have spent different time acquiring sensor data in different parts of the target area. To accommodate such differences, the method may perform a time-based and/or grid-based compensation. To this end, an efficient compensation approach selects a grid of subareas that is auto-sized, modified by combining grid subareas, and/or rotated based on e.g., a grid-time criterion. The method may further identify a traversed part of the target area as a combination of subareas that have been traversed by the insect sensor.

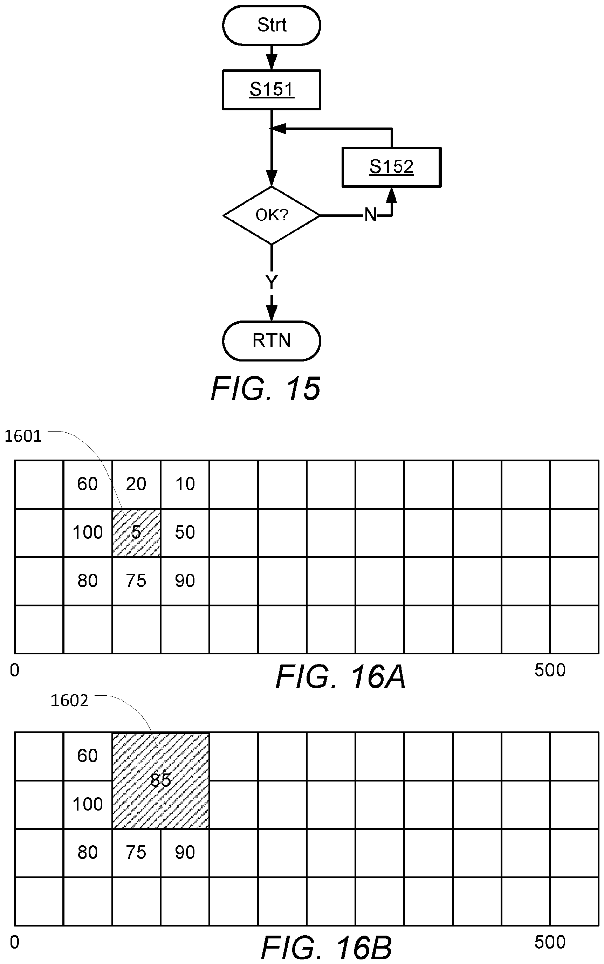

FIG. 15 schematically illustrates a process for selecting the size of the subareas used as a basis for the insect distribution map.

In initial step S151, the process selects a set of initial subareas.

For example, the process may select a grid of base subareas that may be selected to cover the entire target area and may be aligned with the boundaries of the target area or another suitable reference direction. The base subareas may have a predetermined size or a size determined as a predetermined fraction of the target area or in another suitable way. The process may then use the grid of base subareas as the set of initial subareas.

In some embodiments, the process may select the set of initial subareas in a different manner. For example, the process may initially select a grid of base subareas, e.g. as described above. The process may then discard subareas that have not been traversed by the insect sensor at all and select the remaining base subareas, i.e. the traversed base subareas as set of initial subareas.

In yet another example, the process may select the set of initial subareas as patches having been traversed using a "paint-brush" approach: To this end, the process may create a patch for every predetermined distance travelled by the insect sensor. The patch may e.g. be a rectangle aligned with the direction of travel of the insect sensor. The rectangle may have the predetermined distance as a length and a predetermined width, which may be defined based on the size and shape of the detection volume of the insect sensor. This results in a list of patches $p_i$. The union of these patches then represents the part of the target area that has been traversed by the insect sensor while acquiring sensor data:

$$field\ area\ scanned\ =\ \bigcup_{i=1}^{inf} p_i$$

In some embodiments this measure may be refined by defining a minimum observation time to decide what field area that is considered traversed. The union of the traversed patches may be represented as an additional layer relative to a grid of base subareas.

In any event, the process may then determine how much time the insect sensor has spent in the individual initial subareas. If all initial subareas have been visited for at least a certain minimum period of time, the process may select the set of initial subareas as the set of subareas to be used as a basis for creating the insect distribution map. Otherwise, the process may proceed at step S152 and resize one, some are all of the initial subareas.

This resizing process may then be reiterated until all resulting subareas have been traversed by the insect sensor acquiring data for at least a minimum observation time.

It will be appreciated that the minimum observation time may be predetermined or it may be dynamically selected. For example, the process may determine a distribution of observation times for all current subareas and select the minimum observation from that distribution.

Resizing the subareas may be performed in different ways:

In one embodiment, the process resizes all subareas of the grid so as to arrive at a resized grid.

In another example, the process may selectively resize individual subareas, e.g. as illustrated by FIG. 16A and FIG. 16B.

FIG. 16A schematically illustrates an example of a grid of initial subareas, in this example a regular grid of square subareas. In the example of FIGs. 16A and B, the observation times in seconds are indicated for some of the initial subareas.

The process may identify one of the initial subareas, or a set of initial subareas, having a smallest observation time, i.e. an observation time smaller than the other initial subareas. In the example of FIG. 16A, this initial subarea is assumed to be subarea 1601. The process may then join the identified subarea having the smallest observation time with one or more neighbouring subareas, resulting in a resized subarea which corresponds to the union of initial subareas, e.g. successively identifying a smallest neighbouring subarea.

It will be appreciated that the process may employ different strategies for joining subareas. For example, the process may only join the identified subarea with a single neighbouring subarea, e.g. with the neighbouring subarea having the smallest observation time of all neighbouring subareas. In another strategy, the process may resize the identified subarea such that the resulting resized subarea has the same shape as the original initial subarea, but a different size. An example of this is illustrated in FIG. 16B where the process has joined identified subarea 1601 with three neighbouring subareas resulting resized subarea 1602. Among the possible ways of resizing the identified subarea 1601, the process may e.g. select the neighbouring subareas such that the resulting resized subarea has the smallest observation time of all alternative ways of resizing.

In the example of FIG, 16B the resulting resized subarea 1602 has an observation time of 85 seconds. The process may then iteratively again identify and resize one of the resulting subareas having a smallest associated observation time, e.g. until all subareas have at least a minimum observation time associated with them. As will be appreciated from FIG. 16B, this strategy may result in a set of subareas that have different sizes. Depending on the strategy for joining subareas, the strategy may even result in subareas of different shapes. Accordingly, the resulting insect distribution map may have a non-uniform resolution. The resolution will be locally higher during parts of the target area where the insect sensor has spent more time acquiring sensor data.

It will further be appreciated that another resizing strategy may divide initial subareas into smaller subareas.

**Claims**

1. A method for measuring insect activity in a geographic area, the method comprising:

   - traversing at least a portion of a target area by a movable insect sensor, the insect sensor configured to acquire sensor data indicative of one or more insect detection events, each insect detection event being indicative of one or more detected insects in a detection volume of the movable insect sensor;
   - creating, by a data processing system based on the acquired sensor data, an insect distribution map of the target area, the insect distribution map representing a plurality of respective subareas of the target area, each subarea having associated with it a respective amount of local insect activity in said subarea.

2. A method according to claim 1, wherein creating the insect distribution map comprises selecting a size of at least a first subarea of the plurality of subareas based on a first amount of time during which the insect sensor has acquired sensor data in said first subarea while traversing at least a portion of the target area.

3. A method according to any one of the preceding claims, wherein creating the distribution map comprises:

   - determining a grid of base subareas, wherein the base subareas of the grid together cover the entire target area,
   - receiving sensor position data indicative of local observation times associated with the respective base subareas, the local observation times being indicative of respective amounts of time during which the insect sensor has acquired sensor data in the respective base subareas while traversing at least a portion of the target area, in particular sensor data suitable for detecting insect detection events,
   - selecting, from the grid of base subareas and based on the sensor position data, a set of initial subareas as a set of traversed base subareas from which the insect sensor has acquired sensor data for at least an observation time threshold.

4. A method according to any one of the preceding claims, wherein creating the distribution map comprises:

- determining a set of initial subareas of the target area;
- receiving sensor position data indicative of local observation times associated with the respective initial subareas, the local observation times being indicative of respective amounts of time during which the insect sensor has acquired sensor data in the respective initial subareas while traversing at least a portion of the target area, in particular sensor data suitable for detecting insect detection events,
- receiving sensor position data indicative of an amount of time spent by the insect sensor in respective ones of the set of initial subareas during the traversing of at least a portion of the target area by the insect sensor;
- resizing, based on the sensor position data, at least a first initial subarea of the set of initial subareas to obtain a first resized subarea in which the insect sensor has acquired sensor data for a first local observation time no less than a minimum local observation time.

5. A method according to claim 4, wherein resizing comprises joining the first initial subarea with one or more neighboring initial subareas.

6. A method according to claim 4, wherein the initial subareas of the set of initial subareas all have a uniform initial size and resizing comprises computing a set of resized subareas, wherein the resized subareas of the set of resized subareas all have a uniform resized size, different from the initial size.

7. A method according to any one of claims 4 through 6, comprising repeating the resizing to obtain a modified set of subareas wherein the insect sensor has spent respective amounts of time in each of the set of modified subareas, wherein some or each of the respective amounts of time are no smaller than the minimum local observation time.

8. A method according to any one of the preceding claims, comprising:

- creating an initial insect distribution map;
- identifying one or more of the subareas of the initial insect distribution map based on their respective local insect activity;
- controlling, or providing instructions or guidance to an operator of the insect sensor for controlling the movable insect sensor to selectively traverse at least a portion of the identified one or more subareas to acquire supplemental sensor data;
- creating a refined insect distribution map having a higher spatial resolution in the identified one or more subareas than the initial insect distribution map.

9. A method according to any one of the preceding claims, wherein the detected insects are airborne insects moving above a ground surface.

10. A method according to any one of the preceding claims; wherein the insect sensor comprises an illumination module configured to illuminate the detection volume and one or more detectors configured to detect light from the detection volume.

11. A method according to claim 10; wherein the illumination module includes a light source configured to emit incoherent light, in particular one or more light emitting diodes and/or one or more halogen lamps.

12. A method according to any one of claims 10 through 11, wherein the illumination module is configured to simultaneously illuminate the entire detection volume.

13. A method according to any one of claims 10 through 12; comprising determining, from sensor signals from the one or more detectors, one or more insect detection events indicative of one or more insects detected in the detection volume.

14. A method according to any one of claims 10 through 13; comprising identifying, from sensor signals from the one or more detectors, one or more types of insects, and/or determining respective amounts of the one or more types of insects detected in the detection volume, in particular based on one or more indicators chosen from:

- an indicator feature extracted from the sensor signals by a trained machine-learning algorithm;
- a detected trajectory of movement of an insect inside the detection volume;
- a detected speed of movement of an insect inside the detection volume;
- one or more detected wing beat frequencies;
- a melanisation ratio;
- an insect glossiness;
- a body-wing ratio;
- a relative or absolute total size;
- relative or absolute body size;
- a relative or absolute wing size.

**15.** A method according to any one of the preceding claims; wherein the detection volume is a volume relative to the insect sensor wherein the detection volume traverses the target area with the insect sensor.

**16.** A method according to any one of the preceding claims, wherein the local insect activity is indicative of a local biodiversity index.

**FIG. 1**

**FIG. 2**

*FIG. 3*

*FIG. 4*

FIG. 5

FIG. 6

FIG. 7

*FIG. 8*

*FIG. 9*

*FIG. 10*

FIG. 11A

FIG. 11B

FIG. 13A

FIG. 13B

FIG. 13C

*FIG. 14*

Strt

S151

S152

OK?

N

Y

RTN

FIG. 15

1601

| | 60 | 20 | 10 | | | | | | | | | |
| | 100 | 5 | 50 | | | | | | | | | |
| | 80 | 75 | 90 | | | | | | | | | |
| | | | | | | | | | | | | |

0                          FIG. 16A                          500

1602

| | 60 | 85 | | | | | | | | | |
| | 100 | | | | | | | | | | |
| | 80 | 75 | 90 | | | | | | | | | |
| | | | | | | | | | | | |

0                          FIG. 16B                          500

Europäisches
Patentamt

European
Patent Office

Office européen
des brevets

# EUROPEAN SEARCH REPORT

Application Number

**EP 21 18 0587**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2019/244156 A1 (SEMPRO LABS LTD [IL]) 26 December 2019 (2019-12-26) | 1,9, 11-13,15 | INV. A01M1/02 |
| A | * Please view the detailed citations in the ESOP * | 2-8,10, 14,16 | |
| | ----- | | |
| Y | US 2019/082650 A1 (LEPEK HANAN [IL] ET AL) 21 March 2019 (2019-03-21) | 1,9, 11-13,15 | |
| A | * Please view the detailed citations in the ESOP * | 2-8,10, 14,16 | |
| | ----- | | |

TECHNICAL FIELDS
SEARCHED      (IPC)

**A01M**

The present search report has been drawn up for all claims

| Place of search | Date of completion of the search | Examiner |
|---|---|---|
| **Munich** | **7 December 2021** | **Behammer, Frank** |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

**EP 4 108 082 A1**

## ANNEX TO THE EUROPEAN SEARCH REPORT
## ON EUROPEAN PATENT APPLICATION NO.

EP 21 18 0587

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2021

| Patent document cited in search report | Publication date | Patent family member(s) | Publication date |
|---|---|---|---|
| WO 2019244156 A1 | 26-12-2019 | NONE | |
| US 2019082650 A1 | 21-03-2019 | AU 2017231048 A1 | 04-10-2018 |
| | | BR 112018068131 A2 | 08-01-2019 |
| | | US 2019082650 A1 | 21-03-2019 |
| | | US 2021195866 A1 | 01-07-2021 |
| | | WO 2017154003 A1 | 14-09-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2021054181 W
- WO 2017182440 A
- WO 2020043841 A

**Non-patent literature cited in the description**

- Assessment of crop insect damage using unmanned aerial systems: A machine learning approach. Proceedings of MODSIM2015, 21st International Congress on Modelling and Simulation. Modelling and Simulation Society of Australia and New Zealand Inc, 1420-1426

- **GEBRU.** Multiband modulation spectroscopy for the determination of sex and species of mosquitoes in flight. *J. Biophotonics,* 2018